(19) Europäisches Patentamt
European Patent Office
Office européen des brevets

(11) **EP 4 664 557 A1**

(12) **EUROPEAN PATENT APPLICATION**
published in accordance with Art. 153(4) EPC

(43) Date of publication:
**17.12.2025 Bulletin 2025/51**

(21) Application number: **24902396.1**

(22) Date of filing: **29.10.2024**

(51) International Patent Classification (IPC):
$H01M\ 4/505$ (2010.01)    $H01M\ 10/0525$ (2010.01)
$H01M\ 4/525$ (2010.01)    $H01M\ 4/36$ (2006.01)

(52) Cooperative Patent Classification (CPC):
H01M 4/36; H01M 4/485; H01M 4/505;
H01M 4/525; H01M 10/0525; Y02E 60/10

(86) International application number:
**PCT/CN2024/128262**

(87) International publication number:
**WO 2025/123972 (19.06.2025 Gazette 2025/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.12.2023 CN 202311695139**

(71) Applicant: **BTR NANO TECH CO., LTD.**
**Shenzhen, Guangdong 518106 (CN)**

(72) Inventors:
• **WEN, Weicheng**
**Shenzhen, Guangdong 518106 (CN)**

• **LUO, Liang**
**Shenzhen, Guangdong 518106 (CN)**
• **ZHENG, Yu**
**Shenzhen, Guangdong 518106 (CN)**
• **WU, Xiaozhen**
**Shenzhen, Guangdong 518106 (CN)**
• **YANG, Shunyi**
**Shenzhen, Guangdong 518106 (CN)**
• **HUANG, Youyuan**
**Shenzhen, Guangdong 518106 (CN)**

(74) Representative: **Cleveland Scott York**
**5 Norwich Street**
**London EC4A 1DR (GB)**

(54) **POSITIVE ELECTRODE MATERIAL, POSITIVE ELECTRODE SLURRY, AND LITHIUM-ION BATTERY**

(57) A cathode material, a cathode slurry and a lithium ion battery provided. The cathode material has a general chemical formula of where $0.80 \leq \sigma \leq 1.20$, $a+b+c+x+y+z=1$, $0.6 \leq a \leq 1.0$, $0.0 \leq b \leq 0.10$, $0.0 \leq c \leq 0.3$, $0 < x < 0.3$, $0 < y < 0.3$, $0 < z < 0.3$, $-0.2 < r < 0.3$, M1, M2, and M3 each independently include at least one of Al, Co, Zr, B, Ti, Ca, Ce, Zn, Cr, Mg, Y, La, Sr, Ba, W, Mo, Nb, Si and Sb, and M1, M2, and M3 are not identical to each other; the cathode material has an initial Coulombic efficiency denoted as E, an oil absorption value denoted as P mL/100g, and a span of volume particle size distribution denoted as S, where S = (D90-D10)/D50. The cathode material satisfies the following relational expression: $1.0 < E*(P-20)+S < 8$. In the technical solution provided, while improving the processability of the cathode material, the cathode material also achieves both high energy density and rate performance.

S4800 3.0kV 5.0mm x1.00k SE(M)    50.0um

FIG. 2

EP 4 664 557 A1

## Description

This application claims the benefit of priority to Chinese Patent Application 2023116951398, filed on December 11, 2023, the entire content of which is incorporated herein by reference for all purposes.

## TECHNICAL FIELD

The present disclosure belongs to the technical field of cathode material, and in particular relates to a cathode material, a cathode slurry and a lithium ion battery.

## BACKGROUND

A rechargeable battery, also called a chargeable battery or a storage battery, refers to a battery that can be continuously used by activating the active material through charging after the battery is discharged. At present, the main rechargeable batteries in the market are nickel-metal hydride batteries, nickel-cadmium batteries, lead-acid (or lead storage) batteries, lithium ion batteries, sodium ion batteries, polymer lithium ion batteries, etc. Among them, the lithium ion battery especially has a particularly wide application, while the higher requirements are placed on the application performance of the lithium ion battery.

At present, a lithium ion battery with both energy density and fast charging performance has become a preferred product along with the higher application requirements for the lithium ion battery in the market. According to studies, in order to achieve both energy density and fast charging performance of a lithium ion battery, it is required that the battery material used by the lithium ion battery has more desirable compatibility with the electrolyte. In addition, the surface property of the battery material also has a large influence on cycle and impedance performance of the battery. However, in a traditional battery material, since there are various chemical groups in the surface coating layer of the cathode material, the chemical groups on the surface of the ternary cathode material have different compatibility from that of the electrolyte, thereby resulting in different interfacial impedances of the material, affecting lithiation and de-lithiation during charging and discharging, and further adversely affecting rate and cycle, etc., of the battery.

Therefore, how to optimize the compatibility between a cathode material and an electrolyte is critical to performance of a lithium ion battery.

## SUMMARY

The purpose of the present disclosure is to provide a cathode material, a cathode slurry and a lithium ion battery. Therefore, while improving the processability of the cathode material, the cathode material also achieves both high energy density and rate performance.

Embodiments of the present disclosure provide a cathode material. The cathode material has a general chemical formula of $Li_\sigma Ni_a Co_b Mn_c M1_x M2_y M3_z O_{2+r}$, where $0.80 \leq \sigma \leq 1.20$, $a+b+c+x+y+z=1$, $0.6 \leq a \leq 1.0$, $0.0 \leq b \leq 0.10$, $0.0 \leq c \leq 0.3$, $0<x<0.3$, $0<y<0.3$, $0<z<0.3$, $-0.2<r<0.3$, M1, M2, and M3 each independently include at least one of Al, Co, Zr, B, Ti, Ca, Ce, Zn, Cr, Mg, Y, La, Sr, Ba, W, Mo, Nb, Si and Sb, and M1, M2, and M3 are not identical to each other.

The cathode material has an initial Coulombic efficiency denoted as E, an oil absorption value denoted as P mL/100g, a span of volume particle size distribution denoted as S, where S = (D90-D10)/D50, a specific surface area denoted as A $m^2/g$, and a tap density denoted as T $g/cm^3$. The cathode material satisfies at least one of the following relational expressions:

$$1.0 \leq E*(P-20)+S \leq 8;$$

$$0.5 \leq E*(P-20)+A \leq 6.0;$$

and

$$1.0 \leq E*(P-20)+T \leq 8.0.$$

In a first aspect, a cathode material of the present disclosure is provided. The cathode material has a general chemical formula of $Li_\sigma Ni_a Co_b Mn_c M1_x M2_y M3_z O_{2+r}$, where $0.80 \leq \sigma \leq 1.20$, $a+b+c+x+y+z=1$, $0.6 \leq a \leq 1.0$, $0.0 \leq b \leq 0.10$, $0.0 \leq c \leq 0.3$, $0<x<0.3$, $0<y<0.3$, $0<z<0.3$, $-0.2<r<0.3$, M1, M2, and M3 each independently include at least one of Al, Co, Zr, B, Ti, Ca, Ce, Zn, Cr, Mg, Y, La, Sr, Ba, W, Mo, Nb, Si and Sb, and M1, M2, and M3 are not identical to each other.

The cathode material has an initial Coulombic efficiency denoted as E, an oil absorption value denoted as P mL/100g, and a span of volume particle size distribution denoted as S, where S = (D90-D10)/D50. The cathode material satisfies the following relational expression: $1.0 < E*(P-20)+S < 8$.

In a second aspect, a cathode material of the present disclosure is provided. The cathode material has a general chemical formula of $Li_\sigma Ni_a Co_b Mn_c M1_x M2_y M3_z O_{2+r}$, where $0.80 \leq \sigma \leq 1.20$, $a+b+c+x+y+z=1$, $0.6 \leq a \leq 1.0$, $0.0 \leq b \leq 0.10$, $0.0 \leq c \leq 0.3$, $0 < x < 0.3$, $0 < y < 0.3$, $0 < z < 0.3$, $-0.2 < r < 0.3$, M1, M2, and M3 each independently include at least one of Al, Co, Zr, B, Ti, Ca, Ce, Zn, Cr, Mg, Y, La, Sr, Ba, W, Mo, Nb, Si and Sb, and M1, M2, and M3 are not identical to each other.

The cathode material has an initial Coulombic efficiency denoted as E, an oil absorption value denoted as P mL/100g, and a specific surface area denoted as A $m^2/g$. The cathode material satisfies the following relational expression: $0.5 < E*(P-20)+A < 6.0$.

In a third aspect, a cathode material of the present disclosure is provided. The cathode material has a general chemical formula of $Li_\sigma Ni_a Co_b Mn_c M1_x M2_y M3_z O_{2+r}$, where $0.80 \leq \sigma \leq 1.20$, $a+b+c+x+y+z=1$, $0.6 \leq a \leq 1.0$, $0.0 \leq b \leq 0.10$, $0.0 \leq c \leq 0.3$, $0 < x < 0.3$, $0 < y < 0.3$, $0 < z < 0.3$, $-0.2 < r < 0.3$, M1, M2, and M3 each independently include at least one of Al, Co, Zr, B, Ti, Ca, Ce, Zn, Cr, Mg, Y, La, Sr, Ba, W, Mo, Nb, Si and Sb, and M1, M2, and M3 are not identical to each other.

The cathode material has an initial Coulombic efficiency denoted as E, an oil absorption value denoted as P mL/100g, and a tap density denoted as T $g/cm^3$. The cathode material satisfies the following relational expression: $1.0 \leq E*(P-20)+T \leq 8.0$.

Combined with the third aspect, in some embodiments, the cathode material has an initial Coulombic efficiency denoted as E, where $0.87 < E < 0.93$.

In a fourth aspect, embodiments of the present disclosure provide a cathode slurry. The cathode slurry includes a dispersant and the above cathode material.

In a fifth aspect, embodiments of the present disclosure provide a battery. The lithium ion battery includes the cathode material according to the first aspect, the second aspect, and the third aspect.

Compared with the prior art, the present disclosure has the following beneficial effects:

In the cathode material provided by the present disclosure, the oil absorption value P of the cathode material reflects the compatibility between the cathode material and the electrolyte. The higher the oil absorption value of the cathode material, the better the compatibility between the cathode material and the electrolyte, and the lower the oil absorption value, the poorer the compatibility between the cathode material and the electrolyte. However, a too large oil absorption value consumes more dispersant and binder during preparation of the cathode slurry from the cathode material, increasing the production cost, reducing the energy density, thereby affecting the electrochemical performance of the cathode material. Therefore, by controlling the oil absorption value P, the span of volume particle size distribution S, and the initial Coulombic efficiency E of the cathode material within the range of $1.0 \leq E*(P-20)+S \leq 8$, the relationship among the initial Coulombic efficiency, the span of volume particle size distribution S, and the oil absorption value P of the cathode material is balanced, thereby, without affecting the processing performance and the processing cost of the cathode material, improving the compatibility between the cathode material and the electrolyte, facilitating the improvement of the efficiency of lithiation and de-lithiation during the charging and discharging of the cathode material, promoting diffusion of the lithium ions both at the solid-liquid interface on the surface of the cathode material and within the cathode material, reducing the interface impedance between the cathode material and the electrolyte, and thereby allowing the cathode material to achieve both high energy density and rate performance.

In the cathode material provided by the present disclosure, the oil absorption value P of the cathode material reflects the compatibility between the cathode material and the electrolyte. The higher the oil absorption value of the cathode material, the better the compatibility between the cathode material and the electrolyte, and the lower the oil absorption value, the poorer the compatibility between the cathode material and the electrolyte. However, a too large oil absorption value consumes more dispersant and binder during preparing the cathode slurry from the cathode material, increasing the production cost, reducing the energy density, thereby affecting the electrochemical performance of the cathode material. In addition, a too large specific surface area A of the cathode material causes increased side reactions, which consumes too much active lithium ions, thereby resulting in a reduced initial Coulombic efficiency of the cathode material; while a too small specific surface area of the cathode material affects the capacity of the cathode material. Therefore, by controlling the oil absorption value P, the specific surface area A, and the initial Coulombic efficiency E of the cathode material within the range of $0.5 < E*(P-20)+A < 6.0$, the relationship among the initial Coulombic efficiency, the specific surface area A, and the oil absorption value P of the cathode material is balanced, thereby, without affecting the processing performance and the processing cost of the cathode material, improving the compatibility between the cathode material and the electrolyte, facilitating the improvement of the efficiency of lithiation and de-lithiation during the charging and discharging of the cathode material, promoting diffusion of the lithium ions both at the solid-liquid interface on the surface of the cathode material and within the cathode material, reducing the interface impedance between the cathode material and the electrolyte, and thereby allowing the cathode material to achieve both high energy density and rate performance.

In the cathode material provided by the present disclosure, the oil absorption value P of the cathode material reflects the compatibility between the cathode material and the electrolyte. The higher the oil absorption value of the cathode material, the better the compatibility between the cathode material and the electrolyte, and the lower the oil absorption value, the poorer the compatibility between the cathode material and the electrolyte. However, a too large oil absorption value consumes more dispersant and binder during preparing the cathode slurry from the cathode material, increasing the production cost, reducing the energy density, thereby affecting the electrochemical performance of the cathode material. In addition, a too large tap density T of the cathode material is not conducive to forming more lithium-ion diffusion channels, affecting the electrochemical performance of the cathode material; while a too small tap density T of the cathode material affects the energy density of the cathode material. Therefore, by controlling the oil absorption value P, the tap density T, and the initial Coulombic efficiency E of the cathode material within the range of $1.0 < E*(P-20)+T < 8.0$, the relationship among the initial Coulombic efficiency, the tap density T, and the oil absorption value P of the cathode material is balanced, thereby, without affecting the processing performance and the processing cost of the cathode material, improving the compatibility between the cathode material and the electrolyte, facilitating the improvement of the efficiency of lithiation and de-lithiation during the charging and discharging of the cathode material, promoting diffusion of the lithium ions both at the solid-liquid interface on the surface of the cathode material and within the cathode material, reducing the interface impedance between the cathode material and the electrolyte, improving the energy density of the cathode material by a suitable tap density, and thereby allowing the cathode material to achieve both high energy density and rate performance.

## BRIEF DESCRIPTION OF DRAWINGS

In order to make the technical solutions according to the embodiments or prior art of the disclosure more apparent, the drawings to which a description of the embodiments or prior art refers to will be introduced below in brief, and apparently the drawings to be described below are only some embodiments of the disclosure, and those ordinarily skilled in the art can further drive from these drawings other drawings without any inventive effort.

FIG. 1 is a flow chart of a preparation method of the cathode material provided by embodiments of the present disclosure; and
FIG. 2 is an SEM image of the cathode material provided by Example 1 of the present disclosure.

## DESCRIPTION OF EMBODIMENTS

In order to better understand the technical solution of the present disclosure, embodiments of the present disclosure are described in detail below with reference to the accompanying drawings.

It is to be made clear that the described embodiments are only some rather than all of the embodiments of the present disclosure. All other embodiments obtained by those skilled in the art without creative efforts according to the embodiments of the present disclosure are within the scope of the present disclosure.

In addition, the terms "first" and "second" are merely used for descriptive purposes, and should not be understood as indicating or implying relative importance or implicitly indicating the quantity of the indicated technical features. Therefore, a feature defined by "first" and "second" can indicate or imply to include one or more of the feature.

For ease of understanding the present disclosure, specific terms are properly defined in the present disclosure. Unless otherwise defined herein, scientific terms and technical terms used in the present disclosure have meanings commonly understood by those skilled in the art to which the present disclosure belongs.

As used herein, the term "matrix" refers to a lithium-based composite oxide synthesized by mixing a precursor and a lithium salt and performing a high-temperature solid-phase reaction, and includes lithium and a metal element.

Due to chemical activity of coating layer on surface of a ternary cathode material, chemical groups on the surface of the ternary cathode material have different compatibility from that of the electrolyte, thereby resulting in different interfacial impedances of the material, affecting lithiation and de-lithiation during charging and discharging, and further adversely affecting rate and cycle, etc., of the battery. Therefore, by improving product process, the inventors improved the compatibility between the cathode material and the electrolyte by using different coating agents and controlling the temperature of the heat treatment at different stages. The inventors had found through studies that the performance change of the cathode material can be embodied in three aspects, i.e., the relationship among the initial Coulombic efficiency E, the oil absorption value P, and the span of volume particle size distribution S; the relationship among the initial Coulombic efficiency E, the oil absorption value P, and the specific surface area A; and the relationship among the initial Coulombic efficiency E, the oil absorption value P, and the tap density T. Specifically, on the one hand, by controlling the oil absorption value P, the span of volume particle size distribution S, and the initial Coulombic efficiency E of the cathode material within the range of $1.0 \leq E*(P-20)+S \leq 8$, the relationship among the initial Coulombic efficiency, the span of volume particle size distribution S, and the oil absorption value P of the cathode material is balanced, thereby, without affecting the processing performance and the processing cost of the cathode material, improving the compatibility between the cathode material and the electrolyte, facilitating the improvement of the efficiency of lithiation and de-lithiation during the charging and discharging of the cathode material, promoting diffusion of the lithium ions both at the solid-liquid interface on the surface of the cathode material and within the cathode material, reducing the interface impedance between the cathode material and the electrolyte, and thereby allowing the cathode material to achieve both high energy density and rate performance. On the other hand, by controlling the oil absorption value P, the specific surface area A, and the initial Coulombic efficiency E of the cathode material within the range of $0.5<E*(P-20)+A<6.0$, the relationship among the initial Coulombic efficiency, the specific surface area A, and the oil absorption value P of the cathode material is balanced, thereby, without affecting the processing performance and the processing cost of the cathode material, improving the compatibility between the cathode material and the electrolyte, facilitating the improvement of the efficiency of lithiation and de-lithiation during the charging and discharging of the cathode material, promoting diffusion of the lithium ions both at the solid-liquid interface on the surface of the cathode material and within the cathode material, reducing the interface impedance between the cathode material and the electrolyte, and thereby allowing the cathode material to achieve both high energy density and rate performance. On another hand, by controlling the oil absorption value P, the tap density T, and the initial Coulombic efficiency E of the cathode material within the range of $1.0\leq E*(P-20)+T<8.0$, the relationship among the initial Coulombic efficiency, the tap density T, and the oil absorption value P of the cathode material is balanced, thereby, without affecting the processing performance and the processing cost of the cathode material, improving the compatibility between the cathode material and the electrolyte, facilitating the improvement of the efficiency of lithiation and de-lithiation during the charging and discharging of the cathode material, promoting diffusion of the lithium ions both at the solid-liquid interface on the surface of the cathode material and within the cathode material, reducing the interface impedance between the cathode material and the electrolyte, improving the energy density of the cathode material by a suitable tap density, and thereby allowing the cathode material to achieve both high energy density and rate performance.

Embodiments of the present disclosure provide a cathode material. The cathode material has a general chemical formula of $Li_\sigma Ni_a Co_b Mn_c M1_x M2_y M3_z O_{2+r}$, where $0.80\leq\sigma\leq1.20$, $a+b+c+x+y+z=1$, $0.6\leq a\leq1.0$, $0.0<b<0.10$, $0.0\leq c\leq0.3$, $0<x<0.3$, $0<y<0.3$, $0<z<0.3$, $-0.2<r<0.3$, M1, M2, and M3 each independently include at least one of Al, Co, Zr, B, Ti, Ca, Ce, Zn, Cr, Mg, Y, La, Sr, Ba, W, Mo, Nb, Si and Sb, and M1, M2, and M3 are not identical to each other.

The cathode material has an initial Coulombic efficiency denoted as E, an oil absorption value denoted as P mL/100g, a span of volume particle size distribution denoted as S, where $S = (D90-D10)/D50$, a specific surface area denoted as A $m^2/g$, and a tap density denoted as T $g/cm^3$. The cathode material satisfies at least one of the following relational expressions:

$$1.0\leq E*(P-20)+S\leq8;$$

$$0.5\leq E*(P-20)+A\leq6.0; \text{ and}$$

and

$$1.0\leq E*(P-20)+T\leq8.0.$$

In the present disclosure, by controlling the oil absorption value P, the span of volume particle size distribution S, and the initial Coulombic efficiency E of the cathode material within the range of $1.0\leq E*(P-20)+S\leq8$, or by controlling the oil absorption value P, the specific surface area A, and the initial Coulombic efficiency E of the cathode material within the range of $0.5<E*(P-20)+A<6.0$, or by controlling the oil absorption value P, the tap density T, and the initial Coulombic efficiency E of the cathode material within the range of $1.0\leq E*(P-20)+T<8.0$, the interface impedance between the cathode material and the electrolyte is reduced, thereby allowing the cathode material to achieve both high energy density and rate performance.

A cathode material of the present disclosure provided. The cathode material has a general chemical formula of $Li_\sigma Ni_a Co_b Mn_c M1_x M2_y M3_z O_{2+r}$, where $0.80\leq\sigma\leq1.20$, $a+b+c+x+y+z=1$, $0.6\leq a\leq1.0$, $0.0<b<0.10$, $0.0\leq c\leq0.3$, $0<x<0.3$, $0<y<0.3$, $0<z<0.3$, $-0.2<r<0.3$, M1, M2, and M3 each independently include at least one of Al, Co, Zr, B, Ti, Ca, Ce, Zn, Cr, Mg, Y, La, Sr, Ba, W, Mo, Nb, Si and Sb, and M1, M2, and M3 are not identical to each other.

The cathode material has an initial Coulombic efficiency denoted as E, an oil absorption value denoted as P mL/100g, and a span of volume particle size distribution denoted as S, where $S = (D90-D10)/D50$. The cathode material satisfies the following relational expression: $1.0<E*(P-20)+S<8$.

In the above solution, the oil absorption value P of the cathode material reflects the compatibility between the cathode material and the electrolyte. The higher the oil absorption value of the cathode material, the better the compatibility between the cathode material and the electrolyte, and the lower the oil absorption value, the poorer the compatibility between the cathode material and the electrolyte. However, a too large oil absorption value consumes more dispersant and binder during preparing the cathode slurry from the cathode material, increasing the production cost, reducing the energy density, thereby affecting the electrochemical performance of the cathode material. Therefore, by controlling the oil absorption value P, the span of volume particle size distribution S, and the initial Coulombic efficiency E of the cathode material within the range of $1.0 \leq E*(P-20)+S \leq 8$, the relationship among the initial Coulombic efficiency, the span of volume particle size distribution S, and the oil absorption value P of the cathode material is balanced, thereby, without affecting the processing performance and the processing cost of the cathode material, improving the compatibility between the cathode material and the electrolyte, facilitating the improvement of the efficiency of lithiation and de-lithiation during the charging and discharging of the cathode material, promoting diffusion of the lithium ions both at the solid-liquid interface on the surface of the cathode material and within the cathode material, reducing the interface impedance between the cathode material and the electrolyte, and thereby allowing the cathode material to achieve both high energy density and rate performance.

Specifically, $\sigma$ can take values such as 0.8, 0.82, 0.85, 0.88, 0.90, 0.95, 0.98, 1.0, 1.02, 1.05, 1.08, 1.1, 1.12, 1.14, 1.16, 1.18 or 1.2, etc., or other value within the above range. a can take values such as 0.6, 0.65, 0.68, 0.7, 0.75, 0.78, 0.8, 0.85, 0.9, 0.95, 0.98 or 1.0, etc. b can take values such as 0, 0.01, 0.02, 0.05, 0.07, 0.08, 0.085, 0.09, 0.095 or 0.10, etc. c can take values such as 0, 0.01, 0.02, 0.05, 0.07, 0.08, 0.09, 0.1, 0.15, 0.2, 0.25 or 0.3, etc. x, y and z can take values independently such as 0.01, 0.06, 0.1, 0.12, 0.15, 0.18, 0.2, 0.25, 0.28, 0.29 or 0.295, etc. r can take values such as -0.19, -0.15, -0.12, -0.1, -0.095, -0.08, -0.07, -0.05, 0, 0.1, 0.15, 0.2, 0.25, or 0.29, etc.

It should be noted that the contents of each element in the cathode material can be determined by a well-known instrument for qualitative analysis and/or quantitative analysis of each elements, such as ICP and ICP-MS, etc.

In some embodiments, the cathode material is a single crystal cathode material, that is, a material with structurally integral grains and without grain boundary defects. Compared with a polycrystalline cathode material, the single crystal cathode material has a more stable structure, more uniform bulk composition distribution and better particle strength, which provides better cycle stability and safety for the lithium ion battery, greatly reduces cracking of the particles during pressing an electrode plate, and improves compaction density and volumetric energy density of the electrode plate. It should be noted that the single crystal cathode material is different from the polycrystalline cathode material (i.e., polycrystalline secondary particle) in that: for the polycrystalline secondary particle, its smallest particle is a secondary particle formed by agglomeration of the nanoscale primary particles. In contrast, for the single crystal cathode material, its smallest particle is usually a micron-sized single primary particle. Generally, in addition to the testing by EBSD, whether the obtained cathode product is a single crystal material is also determined by characterization means such as scanning electron microscopy (SEM), etc. For example, for the single crystal cathode material, SEM is adopted to characterize the morphology of the single crystal particle, to see that the single crystal particle generally appears a shape of a regular or irregular sphere, without significant particle agglomeration. SEM is also adopted to characterize the orientation of the single crystal cathode material, by which it can be observed that when the color in at least one of the crystal grain is the same, it is determined that identical orientation is exhibited in the at least one of the crystal grain. The crystal grain exhibited identical orientation is the single crystal. It should be noted that the "single crystal cathode material" known to those skilled in the art is not a strictly "monocrystal" in crystallography. In crystallography, an ideal monocrystal refers to a crystal exhibiting exactly identical arrangement and orientation. However, limited by impurities, strain and crystalline defects, an ideal monocrystal is very rare and difficult to produce in a laboratory. Therefore, the single crystal cathode material known in the art, in reality, is more accurately a "monocrystal-like morphology" cathode material, which only exhibits a large particle size like the monocrystal in size and is different from a polycrystal composed of numerous small primary particles.

In some embodiments, M1, M2, and M3 each independently include at least one of Al, Co, Zr, B, Ti, Ca, Ce, Zn, Cr, Mg, Y, La, Sr, Ba, W, Mo, Nb, Si and Sb, and M1, M2, and M3 are not identical to each other. These dopant elements M1, M2 and M3 keep the lattice constant of the cathode material stable, improving the surface structure of the material, improving the cycle stability of the material, and inhibiting the structural collapse, thereby improving the performance of the cathode material. If the dopant elements M1, M2 and M3 are the same chemical element, no obvious improvement effect is achieved. It should be noted that, M1, M2, and M3 are not identical to each other means that there is at least one different element present among the elements M1, M2, and M3. For example, when M1, M2, and M3 all include only one element, M1, M2, and M3 are different to each other. When M1, M2, and M3 each include multiple elements, there is at least one different element present among M1, M2, and M3.

In some embodiments, with the total mass of other metal elements except element Li in the cathode material taken as 100 wt%, a sum of mass content of any two of the M1, M2, and M3 is 0.01 wt% to 50 wt%, which may specifically be 0.01 wt%, 1 wt%, 2 wt%, 5 wt%, 10 wt%, 15 wt%, 20 wt%, 25 wt%, 35 wt%, 40 wt%, 45 wt% or 50 wt%, etc. In some embodiments, the dopant elements M2 and M3 are located on the surface layer of the cathode material, which improves the compatibility between the surface of the material and the electrolyte, and improving the de-lithiation efficiency. In some embodiments, with the total mass of other metal elements except element Li in the cathode material taken as 100 wt%, a sum of mass content of the element M2 and the element M3 is 0.01 wt% to 50 wt%, which may specifically be 0.01 wt%, 0.03 wt%, 0.1 wt%, 0.5 wt%, 1 wt%, 1.5 wt%, 2 wt%, 5 wt%, 10 wt%, 15 wt%, 20 wt%, 25 wt%, 35 wt% or 50 wt%, etc., or other value within the above range, which is not limited herein. The mass contents of the element M2 and the element M3 in the cathode material is within the range, which improves the crystal structural stability of the cathode material, improves the conductivity, and has beneficial effects of obviously improving the thermal stability and the cycle stability, etc. A too high mass contents of the element M2 and the element M3 result in a reduced initial specific discharge capacity of the material, while a too low mass content does not achieve effects of improving the cycle stability and the thermal stability of the material. Preferably, with the total mass of other metal elements except element Li in the cathode material taken as 100 wt%, a sum of mass content of the element M2 and the element M3 is 0.01 wt% to 10 wt%.

In some embodiments, M1, M2, and M3 each independently include at least one of Al, Co, Zr, B, Ti, Ca, Ce, Zn, Cr, Mg, Y, La, Sr, Ba, W, Mo, Nb, Si and Sb, and M1, M2, and M3 are not identical to each other. Moreover, at least one of M1, M2, and M3 includes B.

In some embodiments, the cathode material exhibits a crystal structure of hexagonal crystal structure or monoclinic crystal structure.

In some embodiments, the cathode material has an initial Coulombic efficiency denoted as E, where $0.87<E<0.93$, which may specifically be 0.87, 0.88, 0.89, 0.90, 0.91, 0.92, 0.925, or 0.93, etc., or other value within the above range, which is not limited herein. Preferably, the cathode material has an initial Coulombic efficiency denoted as E, where $0.90<E<0.93$.

In some embodiments, the cathode material has a span of volume particle size distribution denoted as S, where $1.0\leq S\leq 1.6$, which may specifically be 1.0, 1.1, 1.15, 1.2, 1.25, 1.3, 1.35, 1.4, 1.45, 1.5, 1.55, or 1.6, etc., or other value within the above range, which is not limited herein. It should be noted that, in the present disclosure, the cathode material has a span of volume particle size distribution denoted as S, where $S=(D90-D10)/D50$. Specifically, for the span of volume particle size distribution of the cathode material herein, based on all particles, the volume weighted cumulative particle size distribution is measured by the laser diffraction method for the particle size distribution test, where D10 represents the particle size corresponding to a cumulative particle size distribution percentage of the powder reaching 10%, D50 represents the particle size corresponding to a cumulative particle size distribution percentage of the powder reaching 50%, and D90 represents the particle size corresponding to a cumulative particle size distribution percentage of the powder reaching 90%.

By controlling the span of volume particle size distribution of the cathode material to be within the above range, it indicates that the cathode material has a relatively suitable volume particle size distribution, which is beneficial to improving the specific capacity of the cathode material. Further, the relatively concentrated volume particle size distribution of the cathode material indicates an increased adhesion degree among the particles of the cathode material, which shortens the lithium-ion transport path, thereby facilitating the de-lithiation and lithiation, and facilitating the improvement of the initial Coulombic efficiency and fast charging performance of the cathode material.

In some embodiments, the cathode material has an oil absorption value denoted as P mL/100g, where $10\leq P\leq 40$, which may specifically be 10 mL/100g, 12 mL/100g, 15 mL/100g, 20 mL/100g, 25 mL/100g, 30 mL/100g, 35 mL/100g, 38 mL/100g, 40 mL/100g, etc., or other value within the above range, which is not limited herein. During preparation of the cathode slurry, if the oil absorption value of the cathode material is too high, it leads to an increase in the dispersant and binder required for preparing the slurry, that is, the mass ratio of the cathode material in the cathode slurry is reduced, thereby reducing the energy density of the battery and increase the processing cost; if the oil absorption value of the cathode material is too low, the dispersity of the cathode material in the cathode slurry is reduced. In the present disclosure, without affecting the processing performance and the processing cost of the cathode material, controlling the oil absorption value of the cathode material within the above range is beneficial to improving the compatibility between the cathode material and the electrolyte to allow the cathode material to have better adsorption and infiltration performance on the electrolyte, effectively reducing the interface resistance between the cathode material and the electrolyte, facilitating improvement of the transport of lithium ions and electrons, thereby resulting in better electrochemical performances of the cathode material. Preferably, the cathode material has an oil absorption value denoted as P mL/100g, where $15\leq P\leq 25$.

In some embodiments, the cathode material satisfies the following relational expression: $1.0\leq E*(P-20)+S\leq 8.0$, which may specifically be 1.0, 1.2, 1.5, 2.0, 3.0, 4.0, 5.0, 6.0, 7.0 or 8.0, etc., or other value within the above range, which is not limited herein. In order to allow the cathode material to achieve both high energy density and rate performance, preferably, the cathode material satisfies the following relational expression: $1.0\leq E*(P-20)+S\leq 2.0$.

In some embodiments, the cathode material has a specific surface area of 0.5 m$^2$/g to 1.2 m$^2$/g, which may specifically be 0.5 m$^2$/g, 0.55 m$^2$/g, 0.6 m$^2$/g, 0.65 m$^2$/g, 0.70 m$^2$/g, 0.75 m$^2$/g, 0.8 m$^2$/g, 0.9 m$^2$/g, 1.0 m$^2$/g, 1.1 m$^2$/g or 1.2 m$^2$/g, etc. The specific surface area of the cathode material affects the rate performance of the battery. The larger the specific surface area, the more sufficient the contact of the cathode material and the electrolyte, and the sites of de-lithiation and lithiation are increased, the discharge capacity and the rate capacity of the cathode material is increased, and the fast charging performance is improved. But the oil absorption of the cathode material is also increased. A too large specific surface area causes the cathode material to tend to react with the electrolyte, increasing side reactions, thereby resulting in poor cycle performance. Controlling the specific surface area of the cathode material within the above range is beneficial to improve the cycle performance of the lithium battery made of the cathode material. Preferably, the cathode material has a specific surface area of 0.6 $m^2$/g to 0.8 $m^2$/g.

In some embodiments, when the specific surface area of the cathode material is low, the oil absorption value is also reduced; while a too large specific surface area consumes more dispersant and binder, and the side reactions increase. Therefore, in the present disclosure, the cathode material has an initial Coulombic efficiency denoted as E, an oil absorption value denoted as P mL/100g, and a specific surface area denoted as A $m^2$/g, and the cathode material satisfies at least one of the following relational expressions: $0.5 < E*(P-20)+A < 6.0$.

In the above solution, the oil absorption value P of the cathode material reflects the compatibility between the cathode material and the electrolyte. The higher the oil absorption value of the cathode material, the better the compatibility between the cathode material and the electrolyte, and the lower the oil absorption value, the poorer the compatibility between the cathode material and the electrolyte. However, a too large oil absorption value consumes more dispersant and binder during preparation of the cathode slurry from the cathode material, increasing the production cost, reducing the energy density, thereby affecting the electrochemical performance of the cathode material. In addition, a too large specific surface area A of the cathode material causes increased side reactions, which consumes too much active lithium ions, thereby resulting in a reduced initial Coulombic efficiency of the cathode material; while a too small specific surface area of the cathode material affects the capacity of the cathode material. Therefore, by controlling the oil absorption value P, the specific surface area A, and the initial Coulombic efficiency E of the cathode material within the range of $0.5 < E*(P-20) + A < 6.0$, the relationship among the initial Coulombic efficiency, the specific surface area A, and the oil absorption value P of the cathode material is balanced, thereby, without affecting the processing performance and the processing cost of the cathode material, improving the compatibility between the cathode material and the electrolyte, facilitating the improvement of the efficiency of lithiation and de-lithiation during the charging and discharging of the cathode material, promoting diffusion of the lithium ions both at the solid-liquid interface on the surface of the cathode material and within the cathode material, reducing the interface impedance between the cathode material and the electrolyte, and thereby allowing the cathode material to achieve both high energy density and rate performance.

In some embodiments, $E*(P-20)+A$, which may specifically be 0.5, 0.6, 0.8, 1.0, 2.0, 2.5, 3.0, 3.5, 4.0, 4.5, 5.0, 5.5, 6.0, etc., or other value within the above range, which is not limited herein. In order to, without affecting the processing performance and the processing cost of the cathode material, allow the cathode material to achieve all of high energy density, fast charging performance, and cycle performance, preferably, the cathode material satisfies the following relational expression: $0.5 \leq E*(P-20)+A \leq 1.0$.

In some embodiments, the cathode material has a tap density denoted as T $g/cm^3$, where $1.3 \leq T \leq 2.5$, which may specifically be 1.3 $g/cm^3$, 1.4 $g/cm^3$, 1.5 $g/cm^3$, 1.6 $g/cm^3$, 1.7 $g/cm^3$, 1.8 $g/cm^3$, 1.9 $g/cm^3$, 2.0 $g/cm^3$, 2.1 $g/cm^3$, 2.2 $g/cm^3$, 2.3 $g/cm^3$ or 2.5 $g/cm^3$, etc. The tap density of the cathode material is one of the indexes of the energy density of the material, and the tap density and the span of volume particle size distribution of the cathode material affect each other. The tap density of the cathode material is large, indicating that when the span of volume particle size distribution of the cathode material is larger, the particle dispersion degree is good, which is conducive to improving the dispersion of the cathode slurry. But the increased span of the volume particle size distribution also leads to an increase in the lithium ion transport path, which is not conducive to the de-lithiation and lithiation in the cathode material. Moreover, if the tap density of the cathode material is too large, the cathode plate is too dense, which is not conducive to the infiltration of the cathode plate by the electrolyte to make the lithiation difficult, thereby reducing the fast charging performance of the battery. In addition, a too low tap density of the cathode material leads to decreasing the energy density of the material.

Therefore, in order to allow the cathode material to achieve high energy density and meet the fast charging performance, preferably, the tap density of the cathode material is 1.5 $g/cm^3$ to 2.0 $g/cm^3$.

In some embodiments, cathode material has an initial Coulombic efficiency denoted as E, an oil absorption value denoted as P mL/100g, and a tap density denoted as T $g/cm^3$, and the cathode material satisfies the following relational expression: $1.0 \leq E*(P-20)+T \leq 8.0$, which may specifically be 1.0, 1.2, 1.5, 2.0, 2.5, 3.0, 3.5, 4.0, 4.5, 5.0, 5.5, 6.0, 7.5 or 8.0, etc., or other value within the above range, which is not limited herein. In the above solution, the oil absorption value P of the cathode material reflects the compatibility between the cathode material and the electrolyte. The higher the oil absorption value of the cathode material, the better the compatibility between the cathode material and the electrolyte, and the lower the oil absorption value, the poorer the compatibility between the cathode material and the electrolyte. However, a too large oil absorption value consumes more dispersant and binder during preparation of the cathode slurry from the cathode material, increasing the production cost, reducing the energy density, thereby affecting the electrochemical performance of the cathode material. In addition, a too large tap density T of the cathode material is not conducive to forming more lithium-ion diffusion channels, affecting the electrochemical performance of the cathode material; while a too small tap density T of the cathode material affects the energy density of the cathode material. Therefore, by controlling the oil absorption value P, the tap density T, and the initial Coulombic efficiency E of the cathode material within the range of $1.0 \leq E*(P-20)+T \leq 8.0$, the relationship among the initial Coulombic efficiency, the tap density T, and the oil absorption value P of the cathode material is balanced, thereby, without affecting the processing performance and the processing cost of the cathode material, improving the compatibility between the cathode material and the electrolyte, facilitating the improvement of the efficiency of lithiation and de-lithiation during the charging and discharging of the cathode material, promoting diffusion of the lithium ions both at the solid-liquid interface on the surface of the cathode material and within the cathode material, reducing the interface impedance between the cathode material and the electrolyte, improving the energy density of the cathode material by a suitable tap density, and thereby allowing the cathode material to achieve both high energy density and rate performance.

In order to allow the cathode material to achieve both high energy density and rate performance, preferably, the cathode material satisfies the following relational expression: $1.0 \leq E*(P-20)+T \leq 2.0$.

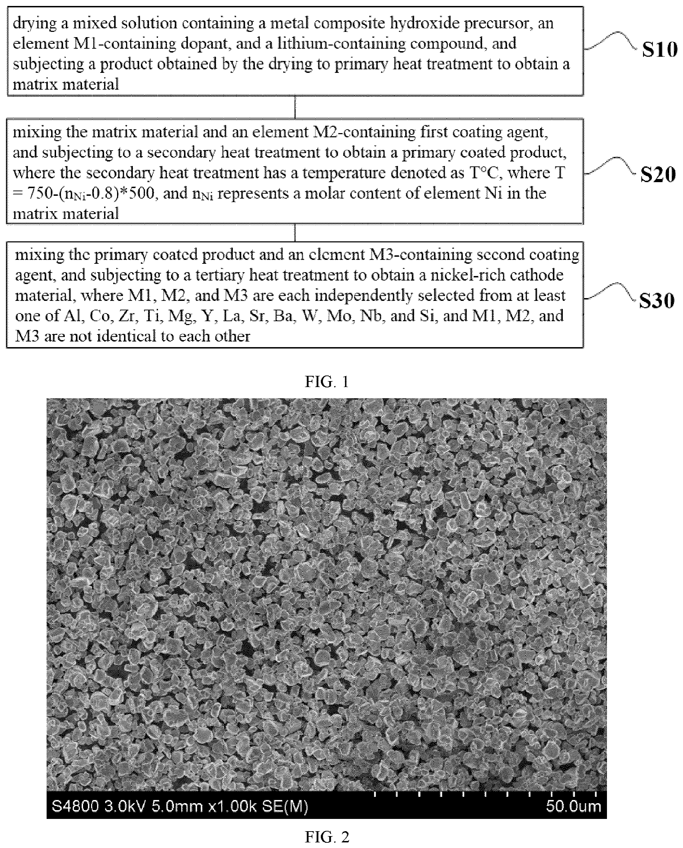

In a second aspect, embodiments of the present disclosure provide a preparation method of the cathode material, as shown in FIG. 1, including the following steps:

step S10, drying a mixed solution containing a metal composite hydroxide precursor, an element M1-containing dopant, and a lithium-containing compound, and subjecting a product obtained by the drying to primary heat treatment to obtain a matrix material;

Step S20, mixing the matrix material and an element M2-containing first coating agent, and subjecting to a secondary heat treatment to obtain a primary coated product, where the secondary heat treatment has a temperature denoted as $T°C$, where $T = 750-(n_{Ni}-0.8)*500$, and $n_{Ni}$ represents a molar content of element Ni in the matrix material; and

step S30, mixing the primary coated product and an element M3-containing second coating agent, and subjecting to a tertiary heat treatment to obtain the cathode material, where M1, M2, and M3 are each independently selected from at least one of Al, Co, Zr, Ti, Ca, Ce, Zn, Cr, Mg, Y, La, Sr, Ba, W, Mo, Nb, and Si, and M1, M2, and M3 are not identical to each other.

In the above technical solution, the precursor, the dopant and the lithium-containing compound are mixed in a mixed solution, dried and subjected to the primary heat treatment to obtain the matrix material, and then mixed with the first coating agent and subjected to the secondary heat treatment. During the secondary heat treatment, by controlling the temperature for the secondary heat treatment, the bonding strength of the coating layer and the matrix material is effectively improved, thereby improving the structural stability of the cathode material. Then the primary coated product is mixed with the second coating agent, and subjected to the tertiary heat treatment, so that the coating layer is tightly combined with the matrix material in the cathode material, thereby reducing residual lithium on the surface of the material. The multiple heat treatments inhibit the generation of impurity phase such as $Li_2Ni_8O_{10}$ on the surface of the material, better improve the surface structure of the cathode material, improve the dispersity of the cathode material, increase the tap density of the cathode material, and improve the oil absorption value and the specific surface area of the cathode material.

The preparation method of the present disclosure is described below with reference to the embodiments: before step S10, the method further includes:
mixing and processing a metal salt solution, a complexing agent, and a pH adjuster to obtain the metal composite hydroxide precursor.

In some embodiments, a mass ratio of the metal salt solution, the complexing agent, and the pH adjuster is 1:(0.01 to 0.10):(0.1 to 0.8), which may specifically be 1:0.01:0.1, 1:0.05:0.3, 1:0.1:1.5, and 1:0.08:0.8, etc.

In some embodiments, the metal salt solution includes a nickel salt solution, a cobalt salt solution, and a manganese salt solution.

Specifically, the nickel salt solution includes at least one of nickel sulfate, nickel chloride, nickel sulfamate, nickel bromide, nickel (II) hydroxide, and nickel carbonyl.

The cobalt salt solution includes at least one of cobalt sulfate, cobalt chloride, and cobalt nitrate.

The manganese salt solution includes at least one of manganese sulfate, manganese nitrate, and manganese chloride.

In some embodiments, the complexing agent is selected as one capable of forming a complex with nickel, cobalt and manganese ions in an aqueous solution. Specifically, the complexing agent includes at least one of ammonium ion supplier, hydrazine, ethylenediaminetetraacetic acid, nitrilotriacetic acid, uracil diacetic acid and glycine, where the ammonium ion supplier includes ammonia water, ammonium sulfate, ammonium chloride, ammonium carbonate, and ammonium fluoride.

In some embodiments, the mixing and processing is performed at a temperature of 10°C to 80°C. Specifically, the mixing and processing is performed at a temperature of 10°C, 20°C, 30°C, 40°C, 50°C, 60°C, 70°C, 80°C, etc., or other value within the above ranges, which is not limited herein. Preferably, the mixing and processing is performed at a temperature of 20°C to 70°C. Controlling a temperature of the co-precipitation reaction within the above range is beneficial to grain growth.

The pH adjuster includes an alkali metal hydroxide, and the alkali metal oxide includes at least one of sodium hydroxide and potassium hydroxide.

In some embodiments, the mixing and processing has a pH value of 9 to 13. Specifically, the mixing and processing has a pH value of 9, 10, 11, 12, 13, etc., or other value within the above range, which is not limited herein. Preferably, the mixing and processing has a pH value of 11 to 13.

In some embodiments, the mixing and processing has a duration of 10 h to 200 h. Specifically, the mixing and processing has a duration of 10, 15, 20, 30, 60, 80, 100, 130, 150, 180, 200, etc., or other value within the above range, which is not limited herein.

In some embodiments, the mixing and processing is performed under stirring at a stirring rate of 800 rpm to 1200 rpm. Specifically, the stirring rate is 800, 880, 900, 960, 1000, 1060, 11130, 1200, etc., or other value within the above range, which is not limited herein.

In some embodiments, the mixing and processing is performed in a reaction tank. The reaction tank is at least one of a continuous reaction tank in which the formed metal composite hydroxide is separated to overflow, and a batch reaction tank in which the metal composite hydroxide is not discharged out of the system until the reaction completes.

In some embodiments, the metal composite hydroxide precursor is obtained by subjecting a slurry suspension of the metal composite hydroxide precursor prepared by the mixing and processing to solid-liquid separation, and washing and drying.

In some embodiments, the solid-liquid separation includes any one of centrifugation and filtration. The solid-liquid separation is to separate the metal composite hydroxide from solvent.

In some embodiments, the washing is performed by washing with deionized water multiple times to remove impurities.

In some embodiments, the drying is performed at a temperature of 100°C to 130°C, which may specifically be 100°C, 110°C, 120°C, 130°C, etc. The drying has a duration of 12 h to 24 h, which may specifically be 12 h, 13 h, 14 h, 15 h, 16 h, 17 h, 18 h, 19 h, 20 h, 21 h, 22 h, 23 h, 24 h, etc.

In some embodiments, the metal composite hydroxide precursor is in a powder state with a mean particle size of 3 $\mu$m to 10 $\mu$m. The metal composite hydroxide precursor has a median particle size of 3 $\mu$m, 4 $\mu$m, 5 $\mu$m, 6 $\mu$m, 7 $\mu$m, 8 $\mu$m, 9 $\mu$m, and 10 $\mu$m, etc.

Step S10, subjecting a metal composite hydroxide precursor, an element M1-containing dopant, and a lithium-containing compound to a primary heat treatment to obtain a matrix material.

In some embodiments, a mass ratio of the metal composite hydroxide precursor, the lithium-containing compound, and the element M1-containing dopant is 1:0.46:0.001 to 1:0.48:0.003.

In some embodiments, a molar ratio of the metal Me in the metal composite hydroxide precursor and Li in the lithium-containing compound is 1.0<Li/Me<1.2. Specifically, Li/Me may be 1.01, 1.02, 1.03, 1.05, 1.06, 1.08, 1.09, 1.1, 1.12, 1.15 or 1.19, etc. Me represents the molar content of all metals in the metal composite hydroxide precursor. Controlling the molar ratio of the metal Me in the metal composite hydroxide precursor and Li in the lithium-containing compound within the above range is beneficial to the formation of grains of the matrix material and the improvement of electrochemical performance of the material. Preferably, 1.0<Li/Me<1.1.

In some embodiments, the metal composite hydroxide precursor has a general chemical formula of $Ni_aCo_bMn_c(OH)_2$, where $0.6 \leq a \leq 1.0$, $0.0 < b < 0.10$, and $0.0 \leq c \leq 0.3$.

In some embodiments, the element M1 includes at least one of Al, Co, Zr, B, Ti, Mg, Y, La, Sr, Ba, W, Mo, Nb, Si, and Sb.

In some embodiments, the element M1 is added in an amount accounting for 0 to 0.3 of the total molar amount of the matrix material.

In some embodiments, the element M1-containing dopant includes at least one of lithium zirconate, lithium titanate, niobium oxide, lithium tungstate, barium oxide, and magnesium hydroxide.

In some embodiments, the element M1-containing dopant has a mean particle size of 10 nm to 50 nm, which may specifically be 10 nm, 20 nm, 30 nm, 40 nm, 50 nm, etc., or other value within the above range, which is not limited herein.

In some embodiments, the lithium-containing compound includes at least one of lithium carbonate, lithium hydroxide, lithium nitrate, and lithium acetate. Preferably, the lithium-containing compound includes lithium hydroxide. Specifically, the lithium hydroxide includes at least one of anhydrous lithium hydroxide and lithium hydroxide monohydrate.

In some embodiments, the primary heat treatment is performed at a temperature of 680°C to 900°C. Specifically, the primary heat treatment is performed at a temperature of 680°C, 700°C, 720°C, 750°C, 780°C, 800°C, 820°C, 850°C, 900°C, etc., or other value within the above range, which is not limited herein. Preferably, the primary heat treatment is performed at a temperature of 780°C to 870°C. Limiting the temperature for heat treatment sintering to the above range is beneficial to grain growth of the nickel-cobalt-manganese ternary single crystal cathode material, to obtain a suitable span of volume particle size distribution S.

In some embodiments, the primary heat treatment has a duration of 5 h to 20 h. Specifically, the primary heat treatment has a duration of 5 h, 6 h, 7 h, 8 h, 9 h, 10 h, 11 h, 12 h, 13 h, 14 h, 15 h, 16 h, 17 h, 18 h, 19 h, 20 h, etc., or other value within the above range, which is not limited herein. Preferably, the primary heat treatment has a duration of 8 h to 15 h.

In some embodiments, the primary heat treatment has a heating rate of 50°C/h to 550°C/h. Specifically, the primary heat treatment has a heating rate of 50°C/h, 100°C/h, 140°C/h, 200°C/h, 250°C/h, 300°C/h, 380°C/h, 400°C/h, 450°C/h, 500°C/h, 550°C/h, etc., or other value within the above range, which is not limited herein. Preferably, the primary heat treatment has a heating rate of 100°C/h to 400°C/h. Further preferably, the primary heat treatment has a heating rate of 140°C/h to 380°C/h.

In some embodiments, the primary heat treatment is performed in an oxygen-containing atmosphere, and the oxygen-containing gas has an oxygen content of greater than or equal to 85%. Specifically, the oxygen-containing gas has an oxygen content of 85%, 86%, 87%, 88%, 89%, 90%, 91%, 92%, 93%, 94%, 95%, 96%, 97%, 100%, etc., or other value within the above ranges, which is not limited herein. Preferably, the oxygen-containing gas has an oxygen content of greater than or equal to 95%.

In some embodiments, an equipment for the primary heat treatment includes a standing box furnace, a roller kiln type continuous furnace, etc.

Step S20, mixing the matrix material and an element M2-containing first coating agent, and subjecting to a secondary heat treatment to obtain a primary coated product, where the secondary heat treatment has a temperature denoted as To°C, where To = 750-($n_{Ni}$-0.8)*500, and $n_{Ni}$ represents a molar content of element Ni in the matrix material.

In some embodiments, the first coating agent includes at least one of an oxide of M2 and a hydroxide of M2.

In some embodiments, a mass ratio of the matrix material and the first coating agent is 1000:(0.5 to 3), which may specifically be 1000:0.5, 1000:1, 1000:1.5, 1000:2, 1000:2.5, 1000:3, etc. Controlling the mass ratio of the matrix material and the first coating agent not only allow M1, M2 and M3 in the cathode material to have appropriate proportions, which satisfies the requirements of the general chemical formulas, but also facilitates adjustment of the specific surface area of the cathode material.

In some embodiments, the first coating agent is at least one of lithium aluminate, lithium titanate, lithium lanthanum titanate, yttrium oxide, aluminum oxide, and titanium oxide. In some embodiments, the secondary heat treatment is performed at a temperature of To°C, where To = 750-($n_{Ni}$-0.8)*500, and $n_{Ni}$ represents a molar content of element Ni in the matrix material. That is, the higher the doping amount of element Ni in the matrix material, the lower the temperature for the secondary heat treatment. It can be understood that the higher the temperature for the secondary heat treatment, the more obvious the adhesion effect of particles, and the oil absorption value of the cathode material increases accordingly, which results in that more dispersant needs to be added during preparing the slurry of the cathode material. Therefore, by adjusting the temperature for the secondary heat treatment through the nickel content, the adhesion degree of particles is effectively inhibited, the oil absorption value of the cathode material is controlled within a proper range, and the relationship among the initial Coulombic efficiency, the tap density T, and the oil absorption value P of the cathode material is balanced, thereby, without affecting the processing performance and the processing cost of the cathode material. In addition, the temperature for the secondary heat treatment also affects the values of the specific surface area A and the span of volume particle size distribution S. The above secondary treatment temperature is beneficial to obtain suitable specific surface area A and span of volume particle size distribution S.

In some embodiments, the secondary heat treatment is performed at a temperature of 600°C to 800°C. Specifically, the secondary heat treatment is performed at a temperature of 600°C, 650°C, 680°C, 700°C, 720°C, 750°C, 780°C, 800°C, etc., or other value within the above range, which is not limited herein. Preferably, the secondary heat treatment is performed at a temperature of 650°C to 750°C.

In some embodiments, the secondary heat treatment has a duration of 1 h to 20 h. Specifically, the secondary heat treatment has a duration of 1 h, 2 h, 3 h, 4 h, 5 h, 6 h, 7 h, 8 h, 9 h, 10 h, 11 h, 12 h, 13 h, 14 h, 15 h, 16 h, 17 h, 18 h, 19 h, 20 h, etc., or other value within the above range, which is not limited herein. Preferably, the secondary heat treatment has a duration of 3 h to 10 h.

In some embodiments, the secondary heat treatment has a heating rate of 50°C/h to 550°C/h. Specifically, the secondary heat treatment has a heating rate of 50°C/h, 100°C/h, 140°C/h, 200°C/h, 250°C/h, 300°C/h, 380°C/h, 400°C/h, 450°C/h, 500°C/h, 550°C/h, etc., or other value within the above range, which is not limited herein. Preferably, the secondary heat treatment has a heating rate of 100°C/h to 400°C/h. Further preferably, the secondary heat treatment has a heating rate of 140°C/h to 380°C/h.

In some embodiments, the secondary heat treatment is performed in an oxygen-containing atmosphere, and the oxygen-containing gas has an oxygen content of greater than or equal to 85%. Specifically, the oxygen-containing gas has an oxygen content of 85%, 86%, 87%, 88%, 89%, 90%, 91%, 92%, 93%, 94%, 95%, 96%, 97%, 100%, etc., or other value within the above ranges, which is not limited herein. Preferably, the oxygen-containing gas has an oxygen content of greater than or equal to 95%.

In some embodiments, an equipment for the secondary heat treatment includes a standing box furnace, a roller kiln type continuous furnace, etc.

In some embodiments, a product obtained by the secondary heat treatment is put into a stone disc-type ultra-fine pulverizer for grinding. The stone disc-type ultra-fine pulverizer has a grinding disc gap of 5 μm to 50 μm, which may specifically be 5 μm, 10 μm, 15 μm, 20 μm, 25 μm, 30 μm, 35 μm, 45 μm, or 50 μm, etc., or other value within the above range, which is not limited herein. Preferably, the stone disc-type ultra-fine pulverizer has a grinding disc gap of 5 μm to 30

μm.

Step S30: mixing the primary coated product and an element M3-containing second coating agent, and subjecting to a tertiary heat treatment to obtain the cathode material.

In some embodiments, the element M3 includes at least one of Al, Co, Zr, B, Ti, Mg, Y, La, Sr, Ba, W, Mo, Nb, Si, and Sb. Preferably, the element M3 is selected from B.

In some embodiments, the second coating agent includes a boron-containing compound, and the boron-containing compound includes at least one of $B_2O_3$, $H_3BO_3$, $Li_2O-B_2O_3$, $Li_3BO_3$, $Li_2B_4O_7$, $Li_2B_2O_7$, and $Li_2B_8O_{13}$. By adding the boron-containing compound to the primary coated product, the boron-containing compound not only chemically reacts with alkaline impurities on the surface of the material, but also covers the surface of the material to form a stable coating layer, thereby not only reducing the alkaline impurities on the surface of the material, but also protecting the surface of the material, and reducing the gas production from $Li_2CO_3$ in the alkaline impurities caused by decomposition and by side reaction with the electrolyte.

In some embodiments, a mass ratio of the primary coated product and the second coating agent is 1:1 to 1:5.

In some embodiments, the tertiary heat treatment is performed at a temperature of 200°C to 400°C. Specifically, the tertiary heat treatment is performed at a temperature of 200°C, 250°C, 280°C, 300°C, 320°C, 360°C, 380°C, 400°C, etc., or other value within the above ranges, which is not limited herein. Preferably, the tertiary heat treatment is performed at a temperature of 250°C to 360°C.

In some embodiments, the tertiary heat treatment has a duration of 1 h to 20 h, or the tertiary heat treatment has a duration of 5 h to 20 h. Specifically, the tertiary heat treatment has a duration of 1 h, 2 h, 3 h, 4 h, 5 h, 6 h, 7 h, 8 h, 9 h, 10 h, 11 h, 12 h, 13 h, 14 h, 15 h, 16 h, 17 h, 18 h, 19 h and 20 h, etc., or other value within the above range, which is not limited herein. Preferably, the tertiary heat treatment has a duration of 5 h to 10 h.

In some embodiments, the tertiary heat treatment has a heating rate of 50°C/h to 550°C/h. Specifically, the tertiary heat treatment has a heating rate of 50°C/h, 100°C/h, 140°C/h, 200°C/h, 250°C/h, 300°C/h, 380°C/h, 400°C/h, 450°C/h, 500°C/h, 550°C/h, etc., or other value within the above range, which is not limited herein. Preferably, the tertiary heat treatment has a heating rate of 100°C/h to 400°C/h. Furthermore, preferably, the tertiary heat treatment has a heating rate of 140°C/h to 380°C/h.

In some embodiments, the tertiary heat treatment is performed in an oxygen-containing atmosphere, and the oxygen-containing gas has an oxygen content of greater than or equal to 85%. Specifically, the oxygen-containing gas has an oxygen content of 85%, 86%, 87%, 88%, 89%, 90%, 91%, 92%, 93%, 94%, 95%, 96%, 97%, 100%, etc., or other value within the above ranges, which is not limited herein. Preferably, the oxygen-containing gas has an oxygen content of greater than or equal to 95%.

In some embodiments, an equipment for the tertiary heat treatment includes a standing box furnace, a roller kiln type continuous furnace, etc.

In some embodiments, the tertiary heat treatment further includes processes of sieving and demagnetizing.

In some embodiments, the sieving involves a mesh size of 200 to 400 meshes.

In a third aspect, embodiments of the present disclosure provide a cathode slurry. The cathode slurry includes a dispersant and the above cathode material.

Since in the present disclosure the oil absorption value of the cathode material maintains certain balanced relationships with the specific surface area, the tap density, or the span of volume particle size distribution, the amount of the binder is reduced during preparing the cathode slurry, so that the mass proportion of the cathode material in the cathode slurry is increased, thereby improving the energy density of the cathode plate. In addition, in order to solve the problem of uneven dispersion caused by the insufficient binder, a proper amount of dispersant is added into the cathode slurry, which improves the dispersion uniformity of the cathode slurry, reduces the formation of filter residues, and improves the filtering performance of the cathode slurry during filtering, thereby allowing the cathode plate formed by coating the cathode slurry to achieve all of higher energy density, rate performance, and better cycle performance.

In some embodiments, with the mass of the cathode material in the cathode slurry taken as 100%, the dispersant has a mass content denoted as M%, where $13 \leq M \leq 18$. Specifically, the dispersant has a mass content of 13%, 14%, 15%, 15.5%, 16%, 16.5%, 17%, or 18%, etc., which is not limited herein. Preferably, the dispersant has a mass content of 15% to 17%.

In the present disclosure, by adopting appropriate dispersant to match the cathode materials with suitable physical and chemical properties, the dispersion uniformity of the cathode material in the cathode slurry is improved, the adhesion of the cathode material in the cathode slurry is reduced, and the filtration efficiency of the cathode slurry is improved to reduce the filtration loss. In addition, the filter residue with large particle size is reduced to coat on the cathode plate, to avoid the degradation of the cycle performance during the charging and discharging.

In some embodiments, the cathode slurry satisfies the following relationship: $15 \leq E*(P-20)/100+M \leq 18$, where E represents the initial Coulombic efficiency of the cathode material, and P represents the oil absorption value of the cathode material.

During preparing the cathode slurry, the amount of the dispersant is related to the oil absorption value of the cathode material. The lower the oil absorption value of the cathode material is, the more amount of the dispersant is required, so as to improve the dispersity of the particles of the cathode material and reduce the amount of filter residues. Theoretically, the more the dispersant is, the better the dispersity of the cathode material particles is. But, too much dispersant reduces the energy density and increases the cost. Thus, for comprehensive consideration of performance in various aspects, E, M and P satisfy the relational expression: $15 \leq E*(P-20)/100+M \leq 18$.

Embodiments of the present disclosure further provide a cathode plate. The cathode plate includes a current collector and a cathode slurry disposed on the current collector.

In the preparation of a lithium ion battery, the quality of the slurry directly affects the performance of the lithium ion battery. By coating the cathode slurry with good dispersity on the current collector, the performance of the battery is improved.

Embodiments of the present disclosure further provide a battery, including: an anode plate, a cathode plate, a separator, and an electrolyte, where the cathode plate is a cathode plate.

By coating the cathode slurry with good dispersity on the current collector to prepare the cathode plate, the performance of the battery is improved.

Embodiments of the present disclosure further provide an electrical equipment. The electrical equipment includes the battery.

By improving the performance of the battery, the performance of the electrical equipment adopting the battery is also improved.

The embodiments of the present disclosure are further illustrated by the following several examples. The embodiments herein are not limited to the specific examples described below. Variations may be made as appropriate within the scope of the independent claims.

Example 1

A preparation method of a cathode material, including the following steps:

(1) a $Ni_{0.885}Co_{0.09}Mn_{0.025}(OH)_2$ precursor was prepared by a co-precipitation method, where D50 of the precursor =3.5 $\mu$m;

(2) the $Ni_{0.885}Co_{0.09}Mn_{0.025}(OH)_2$ precursor, LiOH*H$_2$O, and dopants of nano-TiO$_2$, ZrO$_2$ and MgO were uniformly mixed, and subjected to a primary heat treatment at 840°C with introducing oxygen gas with an oxygen content of greater than 95%, to prepare a matrix material, where Li/Me =1.05, Me =(Ni, Co, and Mn), and D50 of the single crystal matrix material =3.0 $\mu$m;

(3) the matrix material prepared by step (2), nano-Al$_2$O$_3$, and nano-Co$_3$O$_4$ were uniformly mixed, subjected to a secondary heat treatment at 707.5°C, and grinding by a stone disc-type ultra-fine pulverizer with a grinding disc gap of 10 $\mu$m, to obtain a primary coated product; and

(4) the primary coated product and H$_3$BO$_3$ were uniformly mixed, subjecting to a tertiary heat treatment at 300°C, and screened and demagnetized, to obtain the cathode material with a general chemical formula of $LiNi_{0.877}Co_{0.098}Mn_{0.024}Al_{0.002}Ti_{0.002}Zr_{0.002}Mg_{0.001}B_{0.005}O_2$. Its SEM image is shown in FIG. 2.

A cathode slurry was prepared as following from the cathode material:

Step 1: the cathode material, carbon black, and carbon nanotube were added into a double planetary mixing device for mixing; where a mass ratio of the cathode material, carbon black, and carbon nanotube was 97.3:1.0:0.5;

Step 2: a cathode binder PVDF was stirred with NMP to prepare a PVDF glue solution, where a mass ratio of PVDF and NMP was 6:94;

Step 3: the prepared PVDF glue solution was added into a mixture obtained by step 1 in three batches to obtain a slurry, with a time interval between each addition of 2 h, and the slurry was fed into a high-speed shearing disperser for dispersion, to obtain a dispersed slurry; and

Step 4: an NMP solvent was added into the dispersed slurry, adjusted the viscosity to 4500 mPa·s, and filtered through a 100 mesh screen for a filtration time of 80 s, to obtain a cathode slurry.

Examples 2-10

Examples 2-10 were conducted in the same way as Example 1 for preparing the cathode materials, excepting the type and particle size of the precursor, the coating amount of B, or the temperature for the secondary heat treatment, as shown in Table 1 and Table 2 below in detail. These examples were conducted in the same way as Example 1 for preparing the cathode slurry, excepting the content of the dispersant and the filtration time were adjusted for controlling the viscosity, as shown in Table 2 below in detail.

Example 11

This example was conducted in the same way as Example 1 excepting that: in step (2), dopant nano-SrO was adopted to replace the dopant nano-MgO; in step (3), nano $Y_2O_3$ was adopted to replace the nano-$Al_2O_3$; and in step (4), the cathode material with a general chemical formula of $LiNi_{0.877}Co_{0.098}Mn_{0.024}Ti_{0.002}Zr_{0.002}Sr_{0.001}Y_{0.002}B_{0.005}O_2$ was obtained, as shown in Table 1 and Table 2 below in detail.

Example 12

This example was conducted in the same way as Example 1 excepting that: in step (4), $B_2O_3$ was adopted to replace the $H_3BO_3$, and the cathode material with a general chemical formula of $LiNi_{0.877}Co_{0.098}Mn_{0.024}Al_{0.002}Ti_{0.002}Zr_{0.002}Mg_{0.001}B_{0.005}O_2$ was obtained, as shown in Table 1 and Table 2 below in detail.

Example 13

This example was conducted in the same way as Example 1 excepting that: in step (2), no dopant of nano-$TiO_2$, $ZrO_2$ and MgO was added; in step (3), the matrix material prepared by step (2), and nano-$Al_2O_3$ were uniformly mixed. The cathode material with a general chemical formula of $LiNi_{0.881}Co_{0.09}Mn_{0.024}Al_{0.002}B_{0.005}O_2$ was obtained, as shown in Table 1 and Table 2 below in detail.

Example 14

This example was conducted in the same way as Example 1 excepting that: in step (1), a $Ni_{0.70}Co_{0.10}Mn_{0.20}(OH)_2$ precursor was prepared by a co-precipitation method; in step (2), the precursor was $Ni_{0.70}Co_{0.10}Mn_{0.20}(OH)_2$; and in step (3), the temperature for the heat treatment was 800°C. The cathode material with a general chemical formula of $LiNi_{0.692}Co_{0.108}Mn_{0.024}Al_{0.002}Ti_{0.002}Zr_{0.002}Mg_{0.001}B_{0.005}O_2$ was obtained, as shown in Table 1 and Table 2 below in detail.

Example 15

This example was conducted in the same way as Example 14 excepting that: in step (4), the coated product was not uniformly mixed with $H_3BO_3$, and no tertiary heat treatment was performed at 300°C. The cathode material with a general chemical formula of $LiNi_{0.693}Co_{0.109}Mn_{0.025}Al_{0.002}Ti_{0.002}Zr_{0.002}Mg_{0.001}O_2$ was obtained, as shown in Table 1 and Table 2 below in detail.

Example 16

This example was conducted in the same way as Example 1 excepting that: in step (1), a $Ni_{0.70}Co_{0.10}Mn_{0.20}(OH)_2$ precursor was prepared by a co-precipitation method; in step (2), the precursor was $Ni_{0.50}Co_{0.20}Mn_{0.29}(OH)_2$; and in step (3), the temperature for the heat treatment was 800°C. The cathode material with a general chemical formula of $LiNi_{0.492}CO_{0.208}Mn_{0.324}Al_{0.002}Ti_{0.002}Zr_{0.002}Mg_{0.001}B_{0.005}O_2$ was obtained, as shown in Table 1 and Table 2 below in detail.

Example 17

This example was conducted in the same way as Example 1 excepting that: in step (1), a $Ni_{0.70}Co_{0.10}Mn_{0.20}(OH)_2$ precursor was prepared by a co-precipitation method; in step (2), the precursor was $Ni_{0.60}Co_{0.20}Mn_{0.20}(OH)_2$; and in step (3), the temperature for the heat treatment was 800°C. The cathode material with a general chemical formula of $LiNo_{0.592}Co_{0.208}Mn_{0.19}Al_{0.002}Ti_{0.002}Zr_{0.002}Mg_{0.001}B_{0.005}O_2$ was obtained, as shown in Table 1 and Table 2 below in detail.

Example 18

This example was conducted in the same way as Example 1 excepting that: in step (1), a $Ni_{0.90}Co_{0.05}Mn_{0.05}(OH)_2$ precursor was prepared by a co-precipitation method; in step (2), the precursor was $Ni_{0.90}Co_{0.05}Mn_{0.05}(OH)_2$; and in step (3), the temperature for the heat treatment was 800°C. The cathode material with a general chemical formula of $LiNi_{0.892}Co_{0.058}Mno_{0.049}Al_{0.002}Ti_{0.002}Zr_{0.002}Mg_{0.001}B_{0.005}O_2$ was obtained, as shown in Table 1 and Table 2 below in detail.

Comparative Examples 1-3 were conducted in the same way as Example 1 for preparing the cathode materials, excepting the particle size of the precursor, the secondary heat treatment, the coating amount of B, or the temperature for the secondary heat treatment, as shown in Table 1 and Table 2 below in detail. These comparative examples were conducted in the same way as Example 1 for preparing the cathode slurry, excepting the content of the dispersant and the filtration time were adjusted for controlling the viscosity, as shown in Table 2 below in detail.

Comparative Example 4

This comparative example was conducted in the same way as Example 1 excepting that: in step (2), no dopant of nano-$TiO_2$, $ZrO_2$ and MgO was added; step (3) was not performed; and in step (4), the matrix material prepared by step (1) and $H_3BO_3$ were uniformly mixed, and the cathode material with a general chemical formula of $LiNi_{0.883}Co_{0.09}Mn_{0.024}B_{0.005}O_2$ was obtained, as shown in Table 1 and Table 2 below in detail.

Comparative Example 5

This comparative example was conducted in the same way as Example 14 excepting that: in step (3), the sintering temperature was changed to 700°C, and other steps were the same as those in Example 14. The cathode material with a general chemical formula of $LiNi_{0.692}Co_{0.108}Mn_{0.024}Al_{0.002}Ti_{0.002}Zr_{0.002}Mg_{0.001}B_{0.005}O_2$ was obtained, as shown in Table 1 and Table 2 below in detail.

Table 1

| | Structural Formula of the Precursor | Structural Formula of the Cathode Material |
|---|---|---|
| Example 1 | $Ni_{0.885}Co_{0.09}Mn_{0.025}(OH)_2$ | $LiNi_{0.869}Co_{0.098}Mn_{0.024}Al_{0.002}Ti_{0.002}Zr_{0.002}Mg_{0.001}B_{0.002}O_2$ |
| Example 2 | $Ni_{0.885}Co_{0.09}Mn_{0.025}(OH)_2$ | $LiNi_{0.867}Co_{0.098}Mn_{0.024}Al_{0.002}Ti_{0.002}Zr_{0.002}Mg_{0.001}B_{0.004}O_2$ |
| Example 3 | $Ni_{0.885}Co_{0.09}Mn_{0.025}(OH)_2$ | $LiNi_{0.865}Co_{0.098}Mn_{0.024}Al_{0.002}Ti_{0.002}Zr_{0.002}Mg_{0.001}B_{0.006}O_2$ |
| Example 4 | $Ni_{0.885}Co_{0.09}Mn_{0.025}(OH)_2$ | $LiNi_{0.863}Co_{0.098}Mn_{0.024}Al_{0.002}Ti_{0.002}Zr_{0.002}Mg_{0.001}B_{0.008}O_2$ |
| Example 5 | $Ni_{0.885}Co_{0.09}Mn_{0.025}(OH)_2$ | $LiNi_{0.855}Co_{0.108}Mn_{0.024}Al_{0.002}Ti_{0.002}Zr_{0.002}Mg_{0.001}B_{0.006}O_2$ |
| Example 6 | $Ni_{0.885}Co_{0.09}Mn_{0.025}(OH)_2$ | $LiNi_{0.861}Co_{0.098}Mn_{0.024}Al_{0.002}Ti_{0.002}Zr_{0.002}Mg_{0.001}O_2$ |
| Example 7 | $Ni_{0.885}Co_{0.09}Mn_{0.025}(OH)_2$ | $LiNi_{0.871}Co_{0.098}Mn_{0.024}Al_{0.002}Ti_{0.002}Zr_{0.002}Mg_{0.001}O_2$ |
| Example 8 | $Ni_{0.89}CO_{0.085}Mn_{0.025}(OH)_2$ | $LiNi_{0.876}Co_{0.093}Mn_{0.024}Al_{0.002}Ti_{0.002}Zr_{0.002}Mg_{0.001}O_2$ |
| Example 9 | $Ni_{0.885}Co_{0.09}Mn_{0.025}(OH)_2$ | $LiNi_{0.871}Co_{0.098}Mn_{0.024}Al_{0.002}Ti_{0.002}Zr_{0.002}Mg_{0.001}O_2$ |
| Example 10 | $Ni_{0.885}Co_{0.09}Mn_{0.025}(OH)_2$ | $LiNi_{0.871}Co_{0.098}Mn_{0.024}Al_{0.002}Ti_{0.002}Zr_{0.002}Mg_{0.001}O_2$ |
| Example 11 | $Ni_{0.885}Co_{0.09}Mn_{0.025}(OH)_2$ | $LiNi_{0.869}Co_{0.098}Mn_{0.024}Al_{0.002}Ti_{0.002}Zr_{0.002}Mg_{0.001}B_{0.002}O_2$ |
| Example 12 | $Ni_{0.885}Co_{0.09}Mn_{0.025}(OH)_2$ | $LiNi_{0.869}Co_{0.098}Mn_{0.024}Al_{0.002}Ti_{0.002}Zr_{0.002}Mg_{0.001}B_{0.002}O_2$ |
| Example 13 | $Ni_{0.885}Co_{0.09}Mn_{0.025}(OH)_2$ | $LiNi_{0.869}Co_{0.098}Mn_{0.024}Al_{0.002}Ti_{0.002}Zr_{0.002}Mg_{0.001}B_{0.002}O_2$ |
| Example 14 | $Ni_{0.70}Co_{0.10}Mn_{0.20}(OH)_2$ | $LiNi_{0.685}Co_{0.108}Mn_{0.2}Al_{0.002}Ti_{0.002}Zr_{0.002}Mg_{0.001}O_2$ |
| Example 15 | $Ni_{0.70}Co_{0.10}Mn_{0.20}(OH)_2$ | $LiNi_{0.685}Co_{0.108}Mn_{0.2}Al_{0.002}Ti_{0.002}Zr_{0.002}Mg_{0.001}O_2$ |
| Example 16 | $Ni_{0.50}Co_{0.20}Mn_{0.30}(OH)_2$ | $LiNi_{0.483}Co_{0.208}Mn_{0.3}Al_{0.002}Ti_{0.002}Zr_{0.002}Mg_{0.001}B_{0.002}O_2$ |
| Example 17 | $Ni_{0.60}Co_{0.20}Mn_{0.20}(OH)_2$ | $LiNi_{0.583}Co_{0.208}Mn_{0.2}Al_{0.002}Ti_{0.002}Zr_{0.002}Mg_{0.001}B_{0.002}O_2$ |
| Example 18 | $Ni_{0.90}Co_{0.05}Mn_{0.05}(OH)_2$ | $LiNi_{0.883}Co_{0.058}Mn_{0.05}Al_{0.002}Ti_{0.002}Zr_{0.002}Mg_{0.001}B_{0.002}O_2$ |
| Comparative Example 1 | $Ni_{0.885}Co_{0.09}Mn_{0.025}(OH)_2$ | $LiNi_{0.871}Co_{0.098}Mn_{0.024}Al_{0.002}Ti_{0.002}Zr_{0.002}Mg_{0.001}O_2$ |
| Comparative Example 2 | $Ni_{0.885}Co_{0.09}Mn_{0.025}(OH)_2$ | $LiNi_{0.871}Co_{0.098}Mn_{0.024}Al_{0.002}Ti_{0.002}Zr_{0.002}Mg_{0.00}O_2$ |
| Comparative Example 3 | $Ni_{0.885}Co_{0.09}Mn_{0.025}(OH)_2$ | $LiNi_{0.871}Co_{0.098}Mn_{0.024}Al_{0.002}Ti_{0.002}Zr_{0.002}Mg_{0.001}O_2$ |
| Comparison Example 4 | $Ni_{0.885}Co_{0.09}Mn_{0.025}(OH)_2$ | $LiNi_{0.883}Co_{0.09}Mn_{0.024}B_{0.002}O_2$ |

(continued)

|  | Structural Formula of the Precursor | Structural Formula of the Cathode Material |
|---|---|---|
| Comparative Example 5 | $Ni_{0.70}Co_{0.10}Mn_{0.20}(OH)_2$ | $LiNi_{0.685}Co_{0.108}Mn_{0.2}Al_{0.002}Ti_{0.002}Zr_{0.002}Mg_{0.001}O_2$ |

Table 2. Preparation Parameters of the Cathode Material and the Cathode Slurry

| No. | Preparation Parameters of the Cathode Material | | | | | | | Preparation Parameters of the Cathode Slurry | |
|---|---|---|---|---|---|---|---|---|---|
| | Precurso r D50/$\mu$m | Tempera ture for Primary Heat Treatme nt/°C | Matrix Material D50/$\mu$m | Residual Lithium on the Surface of the Matrix Material/ppm | $n_{Ni}$ | Temperature for Secondary Heat Treatment/° C | B coating amount/pp m | Dispe rsant Conte nt/% | Filter Time/ s |
| Example 1 | 3.5 | 840 | 3.0 | 1000 | 0.885 | 707.5 | 100 | 15 | 80 |
| Example 2 | 3.5 | 840 | 3.0 | 1000 | 0.885 | 707.5 | 200 | 15 | 100 |
| Example 3 | 3.5 | 840 | 3.0 | 1000 | 0.885 | 707.5 | 300 | 15.5 | 120 |
| Example 4 | 3.5 | 840 | 3.0 | 1000 | 0.885 | 707.5 | 400 | 16 | 140 |
| Example 5 | 3.5 | 840 | 3.0 | 1200 | 0.875 | 712.5 | 300 | 15.5 | 160 |
| Example 6 | 3.5 | 840 | 3.0 | 1500 | 0.875 | 712.5 | 22 | 16 | 180 |
| Example 7 | 3.5 | 840 | 3.0 | 1800 | 0.885 | 707.5 | 25 | 16.5 | 220 |
| Example 8 | 3.5 | 840 | 2.5 | 1000 | 0.89 | 705 | 28 | 17 | 150 |
| Example 9 | 4.5 | 840 | 3.0 | 1000 | 0.885 | 707.5 | 25 | 16 | 120 |
| Example 10 | 3.5 | 840 | 3.0 | 1000 | 0.885 | 707.5 | 0 | 16 | 120 |
| Example 11 | 3.5 | 840 | 3.0 | 1000 | 0.885 | 707.5 | 100 | 15 | 80 |
| Example 12 | 3.5 | 840 | 3.0 | 1000 | 0.885 | 707.5 | 100 | 15 | 80 |
| Example 13 | 3.5 | 840 | 3.0 | 1000 | 0.885 | 707.5 | 100 | 15 | 80 |
| Example 14 | 3.5 | 840 | 3.0 | 1000 | 0.7 | 800 | 15 | 90 | 3.5 |
| Example 15 | 3.5 | 840 | 3.0 | 1100 | 0.7 | 800 | 15 | 100 | 3.5 |
| Example 16 | 3.5 | 840 | 3.0 | 1000 | 0.5 | 707.5 | 100 | 15 | 80 |
| Example 17 | 3.5 | 840 | 3.0 | 1000 | 0.6 | 707.5 | 100 | 15 | 80 |
| Example 18 | 3.5 | 840 | 3.0 | 1000 | 0.9 | 707.5 | 100 | 15 | 80 |
| Comparative Example 1 | 3.5 | 840 | 3.0 | 1000 | 0.885 | 750 | 40 | 19 | 150 |
| Comparative Example 2 | 3.5 | 840 | 3.0 | 2000 | 0.885 | 750 | 30 | 18 | 260 |
| Comparative Example 3 | 3.5 | 840 | 4.0 | 1000 | 0.885 | 750 | 15 | 16 | 120 |
| Comparison Example 4 | 3.5 | 840 | 3.0 | 1000 | 0.885 | 700 | 100 | 15 | 80 |

| No. | Preparation Parameters of the Cathode Material | | | | | | | Preparation Parameters of the Cathode Slurry | |
|---|---|---|---|---|---|---|---|---|---|
| | Precurso r D50/$\mu$m | Tempera ture for Primary Heat Treatme nt/°C | Matrix Material D50/$\mu$m | Residual Lithium on the Surface of the Matrix Material/ppm | $n_{Ni}$ | Temperature for Secondary Heat Treatment/° C | B coating amount/pp m | Dispe rsant Conte nt/% | Filter Time/ s |
| Comparative Example 5 | 3.5 | 840 | 3.0 | 1300 | 0.7 | 700 | 18 | 150 | 3.5 |

EP 4 664 557 A1

## EP 4 664 557 A1

Preparation of the Cathode Plate

The cathode slurry prepared by the Examples or Comparative Examples was uniformly coated on a cathode current collector with a primer, and dried, cold pressed, and slitted, to obtain the cathode plate.

Preparation of the Anode Plate

A graphite as the active substance, silicon, acetylene black as a conductive agent, a polymer, and carboxymethyl cellulose (CMC) in a weight ratio of 90:5:2:1.9:1.1 were dissolved in deionized water as a solvent, and uniformly mixed to prepare an anode slurry, which was coated on a copper foil, dried, cold pressed, and slitted, to obtain the anode plate.

Separator

The separator was a PE separator, with PVDF and aluminum oxide coatings coated on the surface thereof for improving the adhesion force and the heat resistance.

Electrolyte

Ethylene carbonate (EC), ethyl methyl carbonate (EMC), and diethyl carbonate (DEC) were mixed in a volume ratio of 1:1:1, and $LiPF_6$:LiFSI (2:8) were uniformly dissolved in the above solution, to obtain the electrolyte. In the electrolyte, the lithium salt had a concentration of 1 mol/L.

Preparation of the Battery

The cathode plate, the separator, and the anode plate were stacked in sequence to allow the separator to locate between the cathode plate and the anode plate to play a role of separation, and then wound to obtain a bare battery cell. The bare battery cell was soldered with a tab, put into an aluminum shell, baked at 80°C to remove water, injected with the electrolyte, and sealed, to obtain the uncharged battery. The uncharged battery was subjected to procedures of standing, hot and cold pressing, formation, shaping, and capacity testing in sequence to obtain the lithium ion battery product.

Table 3 the Addition Parameters of the Dispersant in the Cathode Slurry and Battery Performance Parameters

| No. | P (mL/100g) | S | A (m²/g) | T (g/cm³) | Initial Coulom bic Efficien cy E | E* (P-20) +S | E* (P-20) +A | E* (P-20) +T | Discharg e Capacity at 1/3C (mAh/g) | Discharg e Capacity 5C/1C (mAh/g) | Cycle Life/c ycles |
|---|---|---|---|---|---|---|---|---|---|---|---|
| Example 1 | 19.5 | 1.45 | 0.65 | 1.65 | 0.9 | 1.405 | 0.605 | 1.605 | 205.3 | 92.3 | 2000 |
| Example 2 | 20 | 1.31 | 0.67 | 1.4 | 0.91 | 1.31 | 0.67 | 1.4 | 208.1 | 95.5 | 2000 |
| Example 3 | 20 | 1.28 | 0.69 | 1.35 | 0.92 | 1.28 | 0.69 | 1.35 | 208.3 | 95.6 | 2000 |
| Example 4 | 25 | 1.23 | 0.65 | 1.3 | 0.92 | 5.83 | 5.25 | 5.9 | 208.1 | 95.3 | 2000 |
| Example 5 | 20 | 1.31 | 0.68 | 1.55 | 0.91 | 1.31 | 0.68 | 1.55 | 207.9 | 94.9 | 1800 |
| Example 6 | 22 | 0.65 | 1.51 | 0.9 | 0.9 | 3.09 | 2.45 | 3.31 | 205.1 | 93.1 | 1700 |
| Example 7 | 25 | 0.65 | 1.45 | 0.89 | 0.89 | 5.71 | 5.1 | 5.9 | 204.8 | 92.8 | 1500 |
| Example 8 | 26 | 1.42 | 0.54 | 0.91 | 0.91 | 6.88 | 6.0 | 6.39 | 207.8 | 93.3 | 1700 |
| Example 9 | 25 | 0.76 | 1.5 | 0.92 | 0.92 | 5.9 | 5.36 | 6.1 | 206.9 | 94.9 | 1700 |
| Example 10 | 20 | 1.32 | 0.99 | 1.58 | 0.89 | 1.32 | 0.99 | 1.58 | 204.5 | 95.1 | 1800 |
| Example 11 | 20 | 1.31 | 0.98 | 1.56 | 0.89 | 1.31 | 0.98 | 1.56 | 204.5 | 95.1 | 1800 |
| Example 12 | 20 | 1.41 | 0.68 | 1.57 | 0.89 | 1.41 | 0.68 | 1.57 | 204.5 | 93.1 | 1900 |
| Example 13 | 20 | 1.36 | 0.69 | 1.59 | 0.90 | 1.36 | 0.69 | 1.59 | 205.5 | 93.2 | 1800 |
| Example 14 | 21 | 1.31 | 0.68 | 1.55 | 0.90 | 2.21 | 1.58 | 2.45 | 195.1 | 93.5 | 2000 |
| Example 15 | 20 | 1.29 | 0.65 | 1.67 | 0.89 | 1.29 | 0.65 | 1.67 | 194.5 | 93.3 | 2100 |
| Example 16 | 20 | 1.28 | 0.65 | 1.68 | 0.89 | 1.28 | 0.65 | 1.68 | 155 | 92.5 | 2200 |
| Example 17 | 20 | 1.35 | 0.67 | 1.65 | 0.90 | 1.35 | 0.67 | 1.65 | 162 | 92.7 | 2300 |
| Example 18 | 20 | 1.32 | 0.60 | 1.62 | 0.88 | 1.32 | 0.60 | 1.62 | 209 | 92.1 | 1900 |
| Comparative Example 1 | 40 | 0.74 | 1.15 | 0.91 | 0.91 | 19.39 | 18.94 | 19.35 | 203.9 | 91.0 | 1400 |
| Comparative Example 2 | 30 | 0.72 | 1.25 | 0.88 | 0.88 | 10.01 | 9.52 | 10.05 | 200.0 | 90.7 | 1300 |
| Comparative Example 3 | 33 | 0.6 | 1.71 | 0.88 | 0.88 | 12.69 | 12.04 | 13.15 | 200.5 | 90.0 | 1300 |
| Comparison Example 4 | 35 | 1.31 | 0.69 | 1.15 | 0.88 | 14.51 | 13.89 | 14.35 | 200.0 | 90.0 | 1300 |
| Comparative Example 5 | 30 | 1.33 | 0.72 | 1.25 | 0.89 | 10.23 | 9.62 | 10.15 | 190.0 | 88.0 | 1600 |

**Performance Test**

1. Test Method of the Tap Density of the Cathode Material

GB/T5162-1985 metal powder-tap density test was adopted.

2. Test Method of the Specific Surface Area of the Cathode Material

The specific surface area of the cathode material was tested by GB/T19587-2004 gas adsorption BET method.

3. Test Method of the Oil Absorption Value of the Cathode Material

An ASAHI S-500 oil absorption value tester of ASAHISOUKEN, Japan was adopted for the test. The oil absorption value O was the amount of flaxseed oil added dropwise when the torque generated by change in viscosity characteristics reached 70% of the maximum torque, in an unit of mL/100g.

4. Test Method of the Span of Volume Particle Size Distribution of the Cathode Material

The particle size test method was referred to GB/T 19077-2016. A laser particle size analyzer, such as a Mastersizer 3000 laser particle size analyzer of Malvern, UK, was adopted for measuring conveniently.
The function of the span of volume particle size distribution of the two peaks was expressed as:

$$Span = \frac{D90-D10}{D50}$$

5. Test of the Battery Capacity:

(i) stood for 30 min; (ii) charged at 1/3C to 4.25V, and charged at a constant voltage of 4.25V until reaching 0.05C; (iii) stood for 30 min; and (iv) discharged at 1/3C to 2.8V, to obtain capacity C0. The obtained energy was the energy of the battery, and the energy density per weight = the energy/the weight of the battery.

Testing Method of the Initial Coulombic efficiency

(i) stood for 120 min; (ii) charged at 0.1C to 4.25V, and charged at a constant voltage of 4.25V until reaching 0.05C, to obtain capacity C1; (iii) stood for 30 min; and (iv) discharged at 0.1C to 2.8V, to obtain capacity C2. The initial Coulombic efficiency = C1/C2.

6. Test of the Lithium Precipitation of the Battery:

(i) stood for 5 min; (ii) discharged at 1/3C0 to 2.8V; (iii) stood for 5 min; (iv) charged at 1.2C0 to 50%SOC; (v) charged at 0.87C0 to 80%SOC; (vi) charged at 1/3C0 to 4.25V, and charged at a constant voltage of 4.25V until reaching 0.05C; (vii) stood for 10 min; (viii) discharged at 1/3C0 to 2.8V; (ix) stood for 5min; (x) repeated the steps (iv) to (ix) for 5 times; then charged at 1/3C to 4.25V, and charged at a constant voltage of 4.25V until reaching 0.05C; and stood for 5 min.

7. Test of the Cycling of the Battery:

The temperature was adjusted to 45°C, and held for 2 h.
(i) stood for 5 min, (ii) charged at 1/3C to 4.25V, and charged at a constant voltage of 4.25V until reaching 0.05C; (iii) stood for 5 min, and discharged at 0.5C0 to 2.8V; (v) stood for 5 min; and (vi) repeated the steps (vii) to (ix) until the capacity fading to <80%.
As shown in Table 3, from the test data of Examples 1 to 18, it can be seen that, in different cathode material systems, as long as the cathode material satisfies any one of the three relational expressions of $1.0 \leq E^*(P-20)+S \leq 8$, $0.5 < E^*(P-20)+A < 6.0$, and $1.0 \leq E^*(P-20)+T \leq 8.0$, the relationships among the initial Coulombic efficiency; the oil absorption value P; and the span of volume particle size distribution S, the tap density T, or the specific surface area S of the cathode material are balanced, thereby, without affecting the processing performance and the processing cost of the cathode material, improving the compatibility between the cathode material and the electrolyte, facilitating the improvement of the efficiency of lithiation and de-lithiation during the charging and discharging of the cathode material, promoting diffusion of the lithium ions both at the solid-liquid interface on the surface of the cathode material and within the cathode material, reducing the interface impedance between the cathode material and the electrolyte, and thereby allowing the cathode material to achieve both high energy density and rate performance. From the test data of Examples 1 to 4, it can be seen that as the addition amount of the boron-containing compound increases step by step during the tertiary heat treatment, the content of the element B in the cathode material increases, and the oil absorption value of the cathode material tends to increase, this is because the higher the molar content of B in the cathode material, the higher the agglomeration degree of the particles of the cathode material, and the lower the tap density, resulting in the gradual decrease of the filtration performance.

In order to improve the dispersion uniformity of the cathode slurry, the amounts of the dispersant and the binder that need to be consumed are increased. Under the condition that the added dispersant is insufficient, the prepared cathode slurry forms filter residues, thus resulting in poorer filtration performance.

From the relevant data of Examples 1, 5, 6 and 7, and Comparative Example 2, it can be seen that, the higher residual lithium (inactive lithium) on the surface of the cathode material causes an increased viscosity of the binder, which requires more dispersant to disperse the particles, to reduce the formation of filter residues from the cathode slurry, and the filtration time also increases accordingly.

From the related data of Examples 1 and 8, it can be seen that, the nickel content in the cathode material of Example 8 is increased, which requires adjustment of the temperature for the secondary heat treatment, so that the adhesion degree among the particles of the cathode material is increased, the oil absorption value of the cathode material is increased, and more dispersant is required to disperse the particles, but due to the increased nickel the content, the energy density is increased, but the cycle performance is reduced.

From the related data of Examples 4 and 9, it can be seen that, the median particle size of the precursor of the cathode material of Example 9 is increased, the span of volume particle size distribution of the cathode material is decreased, and the tap density is decreased, resulting in the growth of the lithium ion transport path, which is not conducive to the de-lithiation and lithiation in the cathode material. Although the oil absorption value does not change significantly, the fast charge performance of the cathode material is reduced compared with that of Example 1, and the high-temperature cycle performance is reduced.

From the related data of Examples 3 and 10, it can be seen that, in the preparation of the cathode material of Example 10, no boron-containing compound was added. Thus, the residual lithium on the surface of the cathode material is higher, the stability of the coating layer formed on the surface of the cathode material is reduced, the specific surface area of the cathode material is increased, the side reactions are increased, and the cycle performance of the cathode material is reduced.

From the related data of Examples 1 and 11, it can be seen that, by replacing Mg with Sr, and replacing Al with Y in the cathode material of Example 1, the corresponding values of P, S, A, T and E of the obtained cathode material satisfy $1.0 \leq E*(P-20)+S \leq 8$, $0.5 < E*(P-20)+A < 6.0$, and $1.0 \leq E*(P-20)+T \leq 8.0$, thus the battery prepared by adopting which as the cathode material has higher energy density and cycle life, especially the performance in energy density.

From the related data of Examples 1 and 13, it can be seen that, the cathode material of Example 13 is doped with only two elements, and the corresponding values of P, S, A, T and E of the obtained cathode material satisfy $1.0 \leq E*(P-20)+S \leq 8$, $0.5 < E*(P-20)+A < 6.0$, $1.0 \leq E*(P-20)+T < 8.0$, thus the battery prepared by adopting which as the cathode material has relatively high higher energy, but a reduced cycle performance. From the relevant data of Example 1 and Comparative Example 4, it can be seen that, only one element is doped in Comparative Example 4, thus the battery prepared by adopting which as the cathode material has both significantly reduced energy density and cycle performance.

From the above data in Tables 2 and 3, it can be seen that, as shown in Example 3, the median particle size D50 of the precursor $=3.5 \mu m$, the median particle size D50 of the matrix material $=3.0 \mu m$, the surface residual lithium is $<1000$ ppm, the B coating amount is 300 ppm, thus the comprehensive performance of the battery is good.

From the above data in Tables 2 and 3, it can be seen that, as shown in the data of Comparative Examples 1 to 3 and Example 1, the higher the temperature for the secondary heat treatment, the greater the adhesion degree among the particles, the smaller the tap density T, and the oil absorption value is correspondingly increased, thus the amounts of the dispersant and the binder that need to be consumed are increased. Under the condition that the added dispersant is insufficient, the prepared cathode slurry forms filter residues, thus resulting in poorer filtration performance and longer filtration time. But, the tap density becomes too large, the oil absorption value became correspondingly small, the specific surface area is smaller, and the energy density is reduced.

From the above data in Table 3, it can be seen that, the shorter the filtration time represents the uniform dispersion of the particles of the cathode material, without the formation of the filter residue. While when the filtration time is long, and filter residue appears on the surface, it shows the poor local dispersion of the cathode slurry, and there may be a local lithium precipitation problem.

The above description is only preferred embodiments of the present disclosure and is not intended to limit the present disclosure. For those skilled in the art, the present disclosure can be subject to various modifications and changes. Any modification, equivalent replacement, improvement, and the like made within the spirit and principles of the present disclosure shall fall within the protection scope of the present disclosure.

**Claims**

1. A cathode material, **characterized in that** the cathode material has a general chemical formula of $Li_\sigma Ni_a Co_b Mn_c M1_{x-}M2_y M3_z O_{2+r}$, wherein $0.80 \leq \sigma \leq 1.20$, $a+b+c+x+y+z=1$, $0.6 \leq a \leq 1.0$, $0.0 \leq b \leq 0.10$, $0.0 \leq c \leq 0.3$, $0 < x < 0.3$, $0 < y < 0.3$, $0 < z < 0.3$, $-0.2 < r < 0.3$, M1, M2, and M3 each independently comprise at least one of Al, Co, Zr, B, Ti, Ca, Ce, Zn, Cr, Mg, Y, La, Sr, Ba, W, Mo, Nb, Si and Sb, and M1, M2, and M3 are not identical to each other; and the cathode material has an initial Coulombic efficiency denoted as E, an oil absorption value denoted as P mL/100g, a span of volume particle size distribution denoted as S, wherein S = (D90-D10)/D50, a specific surface area denoted as A $m^2/g$, and a tap density denoted as T $g/cm^3$, and wherein the cathode material satisfies at least one of the following relational expressions:

$$1.0 \leq E*(P-20)+S \leq 8.0;$$

$$0.5 \leq E*(P-20)+A \leq 6.0;$$

and

$$1.0 \leq E*(P-20)+T \leq 8.0.$$

2. The cathode material according to claim 1, **characterized in that** the cathode material has a general chemical formula of $Li_\sigma Ni_a Co_b Mn_c M1_x M2_y M3_z O_{2+r}$, wherein $0.80 \leq \sigma \leq 1.20$, $a+b+c+x+y+z=1$, $0.6 \leq a \leq 1.0$, $0.0 < b < 0.10$, $0.0 \leq c \leq 0.3$, $0 < x < 0.3$, $0 < y < 0.3$, $0 < z < 0.3$, $-0.2 < r < 0.3$, M1, M2, and M3 each independently comprise at least one of Al, Co, Zr, B, Ti, Ca, Ce, Zn, Cr, Mg, Y, La, Sr, Ba, W, Mo, Nb, Si and Sb, and M1, M2, and M3 are not identical to each other; and the cathode material has an initial Coulombic efficiency denoted as E, an oil absorption value denoted as P mL/100g, and a span of volume particle size distribution denoted as S, wherein S = (D90-D10)/D50, and wherein the cathode material satisfies the following relational expression: $1.0 \leq E*(P-20)+S \leq 8.0$.

3. The cathode material according to claim 2, **characterized in that** the cathode material satisfies at least one of the following features:

    (1) the cathode material has an initial Coulombic efficiency denoted as E, wherein $0.87 \leq E \leq 0.93$; and
    (2) the cathode material has a span of volume particle size distribution denoted as S, wherein $1.0 \leq S \leq 1.6$.

4. The cathode material according to claim 2, **characterized in that** the cathode material satisfies at least one of the following features:

    (1) the cathode material has an oil absorption value denoted as P mL/100g, wherein $10 < P < 40$; and
    (2) the cathode material satisfies the following relational expression: $1.0 \leq E*(P-20)+S \leq 2.0$.

5. The cathode material according to claim 1, **characterized in that** the cathode material has a general chemical formula of $Li_\sigma Ni_a Co_b Mn_c M1_x M2_y M3_z O_{2+r}$, wherein $0.80 \leq \sigma \leq 1.20$, $a+b+c+x+y+z=1$, $0.6 \leq a \leq 1.0$, $0.0 \leq b \leq 0.10$, $0.0 \leq c \leq 0.3$, $0 < x < 0.3$, $0 < y < 0.3$, $0 < z < 0.3$, $-0.2 < r < 0.3$, M1, M2, and M3 each independently comprise at least one of Al, Co, Zr, B, Ti, Ca, Ce, Zn, Cr, Mg, Y, La, Sr, Ba, W, Mo, Nb, Si and Sb, and M1, M2, and M3 are not identical to each other; and the cathode material has an initial Coulombic efficiency denoted as E, an oil absorption value denoted as P mL/100g, and a specific surface area denoted as A $m^2/g$, and wherein the cathode material satisfies the following relational expression: $0.5 < E*(P-20)+A < 6.0$.

6. The cathode material according to claim 5, **characterized in that** the cathode material satisfies at least one of the following features:

    (1) the cathode material has an initial Coulombic efficiency denoted as E, wherein $0.87 \leq E \leq 0.93$; and
    (1) the cathode material has an oil absorption value denoted as P mL/100g, wherein $10 \leq P \leq 40$.

7. The cathode material according to claim 5, **characterized in that** the cathode material satisfies at least one of the following features:

(1) the cathode material has a specific surface area denoted as A m$^2$/g, wherein 0.5<A<1.2; and
(2) the cathode material satisfies the following relational expression: 0.5≤E*(P-20)+A≤1.0.

8. The cathode material according to claim 1, **characterized in that** the cathode material has a general chemical formula of Li$_\sigma$Ni$_a$Co$_b$Mn$_c$M1$_x$M2$_y$M3$_z$O$_{2+r}$, wherein 0.80≤σ≤1.20, a+b+c+x+y+z=1, 0.6≤a≤1.0, 0.0≤b≤0.10, 0.0≤c≤0.3, 0<x<0.3, 0<y<0.3, 0<z<0.3, -0.2<r<0.3, M1, M2, and M3 each independently comprise at least one of Al, Co, Zr, B, Ti, Ca, Ce, Zn, Cr, Mg, Y, La, Sr, Ba, W, Mo, Nb, Si and Sb, and M1, M2, and M3 are not identical to each other; and the cathode material has an initial Coulombic efficiency denoted as E, an oil absorption value denoted as P mL/100g, and a tap density denoted as T g/cm$^3$, and wherein the cathode material satisfies the following relational expression: 1.0≤E*(P-20)+T≤8.0.

9. The cathode material according to claim 8, **characterized in that** the cathode material satisfies at least one of the following features:

(1) the cathode material has an initial Coulombic efficiency denoted as E, wherein 0.87≤E≤0.93; and
(1) the cathode material has an oil absorption value denoted as P mL/100g, wherein 10≤P≤40.

10. The cathode material according to claim 8, **characterized in that** the cathode material satisfies at least one of the following features:

(1) the cathode material has a tap density denoted as T g/cm$^3$, wherein 1.3≤T≤2.5; and
(2) the cathode material satisfies the following relational expression: 1.0≤E*(P-20)+T≤2.0.

11. The cathode material according to any one of claims 1 to 10, **characterized in that** the cathode material satisfies at least one of the following features:

(1) with the total mass of other metal elements except element Li in the cathode material taken as 100 wt%, a sum of mass content of the element M2 and the element M3 is 0.01 wt% to 50 wt%;
(2) the cathode material has an oil absorption value denoted as P mL/100g, wherein 15≤P≤25; and
(3) the cathode material is a single crystal cathode material.

12. The cathode material according to any one of claims 1 to 10, **characterized in that** the cathode material satisfies at least one of the following features:

(1) at least one of M1, M2, and M3 comprises B;
(2) M1 and M3 each independently comprises at least one of Al, Co, Zr, B, Ti, Mg, Y, La, Sr, Ba, W, Mo, Nb, Si, and Sb;
(3) M1 is selected from Ti, Zr, and Mg, M2 is selected from Al and Co, M3 is selected from B, x is 0.005, y is 0.01, and z is 0.005; and
(4) M1 is selected from Ti, Zr, and Sr, M2 is selected from Y and Co, M3 is selected from B, x is 0.005, y is 0.01, and z is 0.005.

13. A cathode slurry, **characterized in that** the cathode slurry comprises a dispersant and the cathode material according to any one of claims 1 to 12.

14. The cathode slurry according to claim 13, **characterized in that** with the mass of the cathode material in the cathode slurry taken as 100%, the dispersant has a mass content denoted as M%, and the cathode slurry satisfies at least one of the following features:

(1) in the cathode slurry, 13<M<18;
(2) the cathode slurry satisfies the following relationship: 15≤E*(P-20)/100+M≤18; and
(3) the dispersant comprises N-methylpyrrolidone.

15. A battery, **characterized in that** the battery comprises the cathode material according to any one of claims 1 to 12.

drying a mixed solution containing a metal composite hydroxide precursor, an element M1-containing dopant, and a lithium-containing compound, and subjecting a product obtained by the drying to primary heat treatment to obtain a matrix material — S10

mixing the matrix material and an element M2-containing first coating agent, and subjecting to a secondary heat treatment to obtain a primary coated product, where the secondary heat treatment has a temperature denoted as T°C, where T = 750-($n_{Ni}$-0.8)*500, and $n_{Ni}$ represents a molar content of element Ni in the matrix material — S20

mixing the primary coated product and an element M3-containing second coating agent, and subjecting to a tertiary heat treatment to obtain a nickel-rich cathode material, where M1, M2, and M3 are each independently selected from at least one of Al, Co, Zr, Ti, Mg, Y, La, Sr, Ba, W, Mo, Nb, and Si, and M1, M2, and M3 are not identical to each other — S30

FIG. 1

S4800 3.0kV 5.0mm x1.00k SE(M)    50.0um

FIG. 2

## INTERNATIONAL SEARCH REPORT

| International application No. |
| --- |
| **PCT/CN2024/128262** |

| A. | CLASSIFICATION OF SUBJECT MATTER |
| --- | --- |

H01M 4/505(2010.01)i; H01M10/0525(2010.01)i; H01M4/525(2010.01)i; H01M4/36(2006.01)i

According to International Patent Classification (IPC) or to both national classification and IPC

| B. | FIELDS SEARCHED |
| --- | --- |

Minimum documentation searched (classification system followed by classification symbols)

IPC: H01M4/-; H01M10/-

Documentation searched other than minimum documentation to the extent that such documents are included in the fields searched

Electronic data base consulted during the international search (name of data base and, where practicable, search terms used)

CNTXT, VCN, ENTXTC, CNKI, ISI_Web of Science: 电池, 正极, 首次库伦效率, 吸油值, 体积粒度分布宽度, 比表面积, 振实密度, 锂, 镍, 钴, 锰, 氧化, Li, Ni, Co, Mn, battery, positive, electrode, anode, first, coulomb, efficiency, oil, absorption, value, volume, particle, size, distribution, ratio, specific surface, packed, tap, density

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 115548294 A (SHENZHEN BTR NANO TECHNOLOGY CO., LTD.) 30 December 2022 (2022-12-30) <br> description, paragraphs 7-9 | 1-15 |
| A | CN 110518232 A (CONTEMPORARY AMPEREX TECHNOLOGY CO., LTD.) 29 November 2019 (2019-11-29) <br> entire document | 1-15 |
| A | US 2018337403 A1 (SUMITOMO METAL MINING CO., LTD.) 22 November 2018 (2018-11-22) <br> entire document | 1-15 |
| A | WO 2023131083 A1 (BEIJING EASPRING MATERIAL TECHNOLOGY CO., LTD.) 13 July 2023 (2023-07-13) <br> entire document | 1-15 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 January 2025** | **08 February 2025** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

# EP 4 664 557 A1

<table>
<tr><td colspan="2">INTERNATIONAL SEARCH REPORT<br>Information on patent family members</td><td colspan="2">International application No.<br><b>PCT/CN2024/128262</b></td></tr>
</table>

| Patent document cited in search report | | | Publication date (day/month/year) | Patent family member(s) | | | Publication date (day/month/year) |
|---|---|---|---|---|---|---|---|
| CN | 115548294 | A | 30 December 2022 | None | | | |
| CN | 110518232 | A | 29 November 2019 | US | 2023246184 | A1 | 03 August 2023 |
| | | | | US | 2022052338 | A1 | 17 February 2022 |
| | | | | ES | 2934943 | T3 | 28 February 2023 |
| | | | | EP | 3951946 | A1 | 09 February 2022 |
| | | | | EP | 3951946 | A4 | 15 June 2022 |
| | | | | EP | 3951946 | B1 | 30 November 2022 |
| | | | | WO | 2020220662 | A1 | 05 November 2020 |
| | | | | EP | 4148830 | A2 | 15 March 2023 |
| | | | | EP | 4148830 | A3 | 05 April 2023 |
| | | | | EP | 4148830 | B1 | 09 August 2023 |
| US | 2018337403 | A1 | 22 November 2018 | US | 10950855 | B2 | 16 March 2021 |
| | | | | WO | 2017073246 | A1 | 04 May 2017 |
| | | | | JP | 2017084513 | A | 18 May 2017 |
| | | | | JP | 6753050 | B2 | 09 September 2020 |
| | | | | EP | 3370285 | A1 | 05 September 2018 |
| | | | | EP | 3370285 | A4 | 12 June 2019 |
| | | | | EP | 3370285 | B1 | 26 May 2021 |
| | | | | KR | 20180067558 | A | 20 June 2018 |
| | | | | KR | 102713713 | B1 | 04 October 2024 |
| WO | 2023131083 | A1 | 13 July 2023 | KR | 20240166568 | A | 26 November 2024 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023116951398